# EUROPEAN PATENT APPLICATION

(11) **EP 4 664 977 A1**
(43) Date of publication of application: **17.12.2025**
(21) Application number: 24752759.1
(22) Date of filing: 31.01.2024
(51) Int. Cl.: H04W 24/10, H04B 17/309, H04B 7/06

(54) **PERFORMANCE EVALUATION METHOD AND APPARATUS**

(30) Priority: 06.02.2023 CN 202310144794
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN)
(74) Representative: Ipsilon
(86) International application number: PCT/CN2024/074899
(87) International publication number: WO 2024/164903

(57) **Abstract**

Provided are a performance evaluation method and apparatus. The method, applied to a terminal device, comprises: receiving a first reference signal sent by a network device, a transmission parameter of the first reference signal being determined by the network device on the basis of channel state information (CSI), and the CSI being determined on the basis of a target object and/or the CSI being transmitted on the basis of the target object; and evaluating the performance of the target object on the basis of the received first reference signal.

## Description

### CROSS-REFERENCES TO RELATED APPLICATIONS

The present application claims priority to Chinese Patent Application No. 202310144794.8 filed on February 06, 2023, entitled "Performance Evaluation Method and Apparatus", which is hereby incorporated by reference in its entirety.

### FIELD

The present application relates to the field of communications, and in particular, to methods and apparatuses for performance evaluation.

### BACKGROUND

In communication systems such as 5G new radio (NR), downlink type II (DL Type II) codebooks may provide better channel state information (CSI) feedback accuracy. However, the feedback overhead of DL Type II codebooks is relatively high. Researches show that artificial intelligence (AI)- or machine learning (ML)-based CSI compression feedback may greatly reduce CSI feedback overhead at the same CSI feedback accuracy, or improve CSI feedback accuracy at the same CSI feedback overhead.

The performance of AI-based CSI feedback method is highly correlated with the matching degree between AI model and channel. In case that the AI model is mismatched with the channel of a current scene (or referred to as mismatch), it is not advisable to use the current AI model or the AI-based CSI feedback method. Therefore, it is necessary to consider evaluating performance of AI models and/or CSI feedback methods to see if they match the current scenario. However, there is a lack of evaluation methods for the CSI compression effect of CSI feedback methods or AI/ML models in the related art.

### BRIEF SUMMARY

Embodiments of the present application provide methods and apparatuses for performance evaluation to solve a problem of a lack of relevant evaluation methods in the prior art.

An embodiment of the present application provides a method for performance evaluation, performed by a terminal device, including:
receiving a first reference signal transmitted from a network device, where a transmission parameter of the first reference signal is determined by the network device based on channel state information (CSI), and the CSI is determined based on a target object and/or the CSI is transmitted based on a target object; and
evaluating performance of the target object based on the received first reference signal.

In an embodiment, the transmission parameter includes at least one of:
a transmission position;
a beamforming parameter; or
resource configuration.

In an embodiment, the target object includes any one or a combination of:
a method for determining CSI;
a method for transmitting CSI; or
a model for determining CSI.

In an embodiment, there is a correspondence between the first reference signal and the target object.

In an embodiment, evaluating performance of the target object based on the received first reference signal includes:
evaluating performance of the target object based on the received first reference signal and the correspondence.

In an embodiment, the method further includes one or more of:
receiving first indication information transmitted from the network device to indicate the correspondence;
transmitting second indication information to the network device to indicate the correspondence; or
determining the correspondence based on a pre-agreement with the network device.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, evaluating the performance of the target object based on the first reference signal includes:
determining a first performance metric corresponding to the first reference signal based on the first reference signal; and
evaluating the performance of the target object based on the first performance metric.

In an embodiment, the first performance metric includes at least one of:
reference signal received power (RSRP);
reference signal received quality (RSRQ);
a signal-to-interference-plus-noise ratio (SINR);
a system performance metric;
a precision metric; or
a distribution metric.

In an embodiment, evaluating the performance of the target object based on the first performance metric includes any one or a combination of:
evaluating the performance of the target object based on the first performance metric and a first value range;
evaluating the performance of the target object based on the first performance metric and a performance metric corresponding to a reference object; or
evaluating the performance of the target object based on the first performance metric and one or more performance metrics corresponding to a reference signal, where a number of the reference signal is one or more.

In an embodiment, before receiving the first reference signal transmitted from the network device, the method further includes:
receiving a second reference signal transmitted from the network device;
determining first CSI based on the second reference signal; and
transmitting the first CSI to the network device, where the first CSI is used for determining, by the network device, the transmission parameter of the first reference signal.

In an embodiment, determining the first CSI based on the second reference signal includes:
determining the first CSI based on a codebook and the second reference signal; or
determining the first CSI based on a first model and the second reference signal;
where, in case of determining the first CSI based on the first model and the second reference signal, the first CSI is used for determining, by the network device, second CSI based on a second model corresponding to the first model, and the second CSI is used for determining, by the network device, the transmission parameter of the first reference signal.

In an embodiment, the target object includes any one or a combination of:
the first model;
the second model;
a two-sided model composed of the first model and the second model; or
a method of determining the first CSI based on a codebook.

In an embodiment, the method further includes:
transmitting an evaluation result to the network device.

Embodiments of the present application provide a method for performance evaluation, performed by a network device, including:
transmitting a first reference signal to a terminal device, where a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

In an embodiment, the transmission parameter includes at least one of:
a transmission position;
a beamforming parameter; or
resource configuration.

In an embodiment, the target object includes any one or a combination of:
a method for determining CSI;
a method for transmitting CSI; or
a model for determining CSI.

In an embodiment, there is a correspondence between the first reference signal and the target object.

In an embodiment, the method further includes one or more of:
transmitting first indication information to the terminal device to indicate the correspondence;
receiving second indication information transmitted from the terminal device to indicate the correspondence; or
determining the correspondence based on a pre-agreement with the terminal device.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, before transmitting the first reference signal to the terminal device, the method further includes:
transmitting a second reference signal to the terminal device;
receiving first CSI determined based on the second reference signal transmitted from the terminal device; and
determining the transmission parameter of the first reference signal based on the first CSI.

In an embodiment, determining the transmission parameter of the first reference signal based on the first CSI includes:
determining the transmission parameter of the first reference signal based on a codebook and the first CSI; or
determining second CSI based on a second model and the first CSI, and determining the transmission parameter of the first reference signal based on the second CSI.

In an embodiment, the target object includes any one or a combination of:
a first model, where the first model is a model corresponding to the second model and used for the terminal device to determine the first CSI;
the second model;
a two-sided model composed of the first model and the second model; or
a method of determining the first CSI based on a codebook.

In an embodiment, the method further includes:
receiving an evaluation result transmitted from the terminal device.

Embodiments of the present application provide a terminal device including a memory, a transceiver, and a processor, where:
the memory is used for storing a computer program; the transceiver is used for transmitting and receiving data under control of the processor; and the processor is used for reading the computer program stored in the memory and performing the method for performance evaluation as described above.

Embodiments of the present application provide a network device including a memory, a transceiver, and a processor, where:
the memory is used for storing a computer program; the transceiver is used for transmitting and receiving data under control of the processor; and the processor is used for reading the computer program stored in the memory and performing the method for performance evaluation as described above.

Embodiments of the present application provide an apparatus for performance evaluation, for use in a terminal device, including:
a first receiving unit, used for receiving a first reference signal transmitted from a network device, where a transmission parameter of the first reference signal is determined by the network device based on channel state information (CSI), and the CSI is determined based on a target object and/or the CSI is transmitted based on a target object; and
a first evaluating unit, used for evaluating performance of the target object based on the received first reference signal.

Embodiments of the present application provide an apparatus for performance evaluation, for use in a network device, including:
a second transmitting unit, used for transmitting a first reference signal to a terminal device, where a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

Embodiments of the present application further provide a processor-readable storage medium, where the processor-readable storage medium stores a computer program for causing a processor to perform the method for performance evaluation performed by the terminal device as described above.

Embodiments of the present application further provide a processor-readable storage medium, where the processor-readable storage medium stores a computer program for causing a processor to perform the method for performance evaluation performed by the network device as described above.

In the methods and apparatuses for performance evaluation provided in embodiments of the present application, by receiving the first reference signal transmitted from the network device, and CSI determined by the target object and/or CSI transmitted by the target object corresponding to the transmission parameter of the first reference signal. CSI determined by the target object and/or CSI transmitted by the target object may be reflected by the first reference signal. Evaluating the performance of the target object through the first reference signal may achieve low-overhead evaluation of the target object and evaluation of multiple target objects.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a schematic diagram of CSI feedback according to an embodiment of the present application;
FIG. 2 is a first schematic flowchart of a method for performance evaluation according to an embodiment of the present application;
FIG. 3 is a second schematic flowchart of a method for performance evaluation according to an embodiment of the present application;
FIG. 4 is a first schematic structural diagram of an apparatus for performance evaluation according to an embodiment of the present application;
FIG. 5 is a second schematic structural diagram of an apparatus for performance evaluation according to an embodiment of the present application;
FIG. 6 is a schematic structural diagram of a terminal device according to an embodiment of the present application; and
FIG. 7 is a schematic structural diagram of a network device according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the present application are clearly and completely described below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

The solutions provided by the embodiments of the present application may be applicable to various systems, especially a 5th generation (5G) system. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, pre-coding transmission, or beamforming transmission.

For the convenience of understanding embodiments of the present application, the following introduces terms or backgrounds associated with embodiments of the present application.

Channel state information (CSI) describes the propagation of radio signals between transmitters and receivers, including the effects of distance, scattering, fading, and other factors on signals.

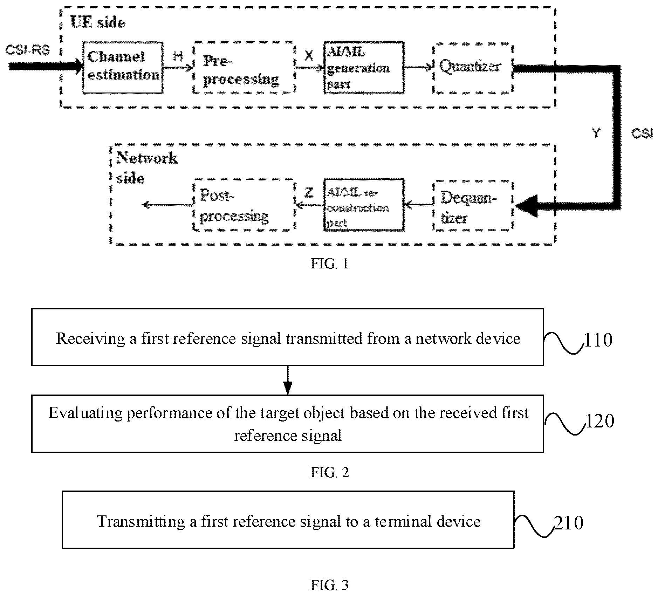

FIG. 1 is a schematic diagram of CSI feedback provided in embodiments of the present application. As shown in FIG. 1, FIG. 1 provides a common communication flowchart between a UE device and a network device for CSI compression feedback. FIG. 1 may be regarded as a two-sided model deployed on both a UE side and a network side. The models include, but not limited to, artificial intelligence (AI) models, machine learning (ML) models, neural network models, data-driven technology models, etc. In FIG. 1:
On the UE side: the CSI generation part is used to compress the CSI reference signal (CSI-RS) or compress a pre-processed channel X, and quantize it into binary bits for feedback to the network side. In FIG. 1, the CSI generation part is the model deployed on the UE side, also referred to as an AI/ML generation part or an AI/ML encoder, etc.

The pre-processed channel X may be obtained in following ways: performing channel estimation on CSI-RS to obtain a channel state matrix H, pre-processing H to obtain X, and inputting X into the AI/ML generation part.

On the network (NW) side: the binary bits fed back by the UE side are input into the dequantizer for dequantization, and the CSI reconstruction part, also referred to as the AI/ML reconstruction part or AI/ML decoder, is used to recover the CSI. In FIG. 1, the CSI reconstruction part is the model deployed on the network side, also referred to as the AI/ML reconstruction part or AI/ML decoder, etc.

In an embodiment, the network side also performs some post-processing operations.

On the UE side, the input of the CSI generation part may be a raw channel or a pre-coding matrix. On the network side, the output of the CSI reconstruction part may also be a raw channel or a pre-coding matrix. The input of the CSI generation part on the UE side and the output of the CSI reconstruction part may be the same or different.

Pre-processing the channel on the UE side may reduce the dimensionality of the CSI generation part input or improve its generalization capability, thereby reducing the complexity and storage overhead of training of the CSI generation part. Some common pre-processing operations include time domain truncation, frequency domain sampling, time/space/frequency domain transformation, etc.

There is a lack of evaluation methods for the CSI compression effect of CSI feedback methods or AI/ML models in the related art.

The solutions in embodiments of the present application are clearly and completely described below in conjunction with the accompanying drawings. The described embodiments are only a part of the embodiments of the present application and not all of them. Based on the embodiments in the present application, all other embodiments obtained by those skilled in the art without creative labor are within the scope of protection of the present application.

FIG. 2 is a first schematic flowchart of a method for performance evaluation according to an embodiment of the present application. As shown in FIG. 2, an embodiment of the present application provides a method for performance evaluation, performed by a terminal device, including:
step 110: receiving a first reference signal transmitted from a network device, where a transmission parameter of the first reference signal is determined by the network device based on channel state information (CSI), and the CSI is determined based on a target object and/or the CSI is transmitted based on a target object; and
step 120: evaluating performance of the target object based on the received first reference signal.

In an embodiment, the first reference signal is a downlink reference signal, such as a CSI-RS and a demodulation reference signal (DMRS), etc.

The CSI is determined based on the target object and/or the CSI is transmitted based on the target object. Determining CSI may include compressing CSI, recovering compressed CSI, and predicting CSI. The determination of CSI may refer to the related art, which is not repeated here; transmitting CSI refers to the transmission of CSI between a network device and a terminal device. There are various methods for transmitting CSI, which are also referred to as CSI reporting mode or CSI feedback mode. The methods for transmitting CSI may refer to the related art and are not be repeated here.

The target object is used to determine CSI and/or transmit CSI, and the target object refers to the methods and/or models that need to be evaluated used in the CSI feedback. In an embodiment, the target object includes any one or a combination of:
a method for determining CSI;
a method for transmitting CSI; or
a model for determining CSI.

In an embodiment, methods for determining CSI and methods for transmitting CSI is combined as the CSI feedback method.

The method for determining CSI may include:
a method used by the terminal device to determine CSI; and/or
a method used by the network device to determine CSI.

In an embodiment, the method used by the terminal device to determine CSI refers to a method in which the terminal device generates CSI and transmits it to the network device. For example, in FIG. 1, the UE generates CSI through AI/ML generation part, which is a method for terminal device to determine CSI.

The method used by the network device to determine CSI refers to a method used by the network device to recover the CSI transmitted from the UE, or a method used by the network device to determine the CSI for scheduling. For example, in FIG. 1, the network side uses AI/ML reconstruction part to recover CSI, which is a method for network device to determine CSI.

For the model used to determine CSI, it may be an AI or ML model, or other non-artificial intelligence models that may achieve CSI determination and transmission. The target object may be located on the terminal device, network device, or belong to both sides of the terminal device and network device (as shown in the two-sided model in FIG. 1).

The transmission parameter of the first reference signal is determined by the network device based on CSI, and the network device may directly or indirectly determine the transmission parameter of the first reference signal through CSI determined by the target object and/or CSI transmitted by the target object. In an embodiment, the CSI refers to the CSI determined by the target object and/or the CSI transmitted by the target object. The target object refers to a target object used to determine the CSI and/or a target object used to transmit the CSI.

For example, CSI may be one or more of:
a pre-coding matrix, a raw channel, a channel quality indicator (CQI) or a rank indicator (RI).

The pre-coding matrix includes:
an eigenvector; or
eType II-like PMI (e.g. an eigenvector after angle time delay domain transformation).

The raw channel includes: a frequency domain raw channel or a time domain raw channel.

For example, the raw channel is a full multiple-input multiple-output (MIMO) channel with Tx * Rx dimensions.

A number of the first reference signal may be one or more, and correspondingly, a number of the target object may also be one or more.

For example, the number of the first reference signal is 1, the number of the target object is 1, the CSI determined by the target object and/or the CSI transmitted by the target object correspond to the transmission parameter of the first reference signal, and the first reference signal is used to evaluate performance of the target object.

For example, the number of the first reference signal is multiple, including: RS-1, RS-2, and RS-3; the number of the target object is multiple, including AI-1, AI-2, and AI-3; the CSI determined by AI-1 corresponds to the transmission parameters of RS-1, RS-1 is used to evaluate AI-1; the CSI determined by AI-2 corresponds to the transmission parameters of RS-2, RS-2 is used to evaluate AI-2; the CSI determined by AI-3 corresponds to the transmission parameters of RS-3, RS-3 is used to evaluate AI-3. The present application does not limit the correspondence between the first reference signal and the target object, nor does it specify how to determine the correspondence.

In an embodiment, the above examples are provided for the convenience of understanding the present application and should not constitute any limitation to the present application.

In the method for performance evaluation provided in embodiments of the present application, by receiving the first reference signal transmitted from the network device, and the transmission parameter of the first reference signal corresponds to the CSI determined by the target object and/or the CSI transmitted by the target object. CSI determined by the target object and/or CSI transmitted by the target object may be reflected by the first reference signal. The performance of the target object may be evaluated through the first reference signal to achieve low-overhead evaluation of the target object and evaluation of multiple target objects.

In an embodiment, the transmission parameter includes at least one of:
a transmission position;
a beamforming parameter; or
resource configuration.

In an embodiment, beamforming is also referred to as pre-coding.

In an embodiment, the first reference signal is a beamformed reference signal, also referred to as a beamformed CSI-RS, which refers to a precoded CSI-RS or a beamformed CSI-RS.

The CSI determined by the target object and/or the CSI transmitted by the target object are associated with at least one of the transmission positions, beamforming parameter, or resource configuration of the first reference signal.

In an embodiment, the third indication information transmitted from the network device is received, where the third indication information is used to indicate that the first reference signal of the terminal device is a beamformed reference signal.

In the method for performance evaluation provided in embodiments of the present application, the first reference signal is a beamformed reference signal, the CSI determined by the target object and/or the CSI transmitted by the target object correspond to the transmission parameter of the first reference signal, and the CSI determined by the target object and/or the CSI transmitted by the target object are associated with the transmission of the first reference signal. For example, the CSI determined by the target object and/or the CSI transmitted by the target object may beamform the first reference signal, and the CSI determined by the target object and/or the CSI transmitted by the target object may be reflected by the first reference signal, evaluating the performance of the target object through the first reference signal.

In an embodiment, before receiving the first reference signal transmitted from the network device, the method further includes:
receiving a second reference signal transmitted from the network device;
determining first CSI based on the second reference signal; and
transmitting the first CSI to the network device, where the first CSI is used for determining, by the network device, the transmission parameter of the first reference signal.

In an embodiment, the first CSI may be used by the network device to directly determine the transmission parameter of the first reference signal, and the first CSI may also be used by the network device to indirectly determine the transmission parameter of the first reference signal.

In an embodiment, determining the first CSI based on the second reference signal includes:
determining the first CSI based on a codebook and the second reference signal; or
determining the first CSI based on a first model and the second reference signal.

In an embodiment, in case that the terminal device determines the first CSI based on the codebook and the second reference signal, the network device may determine the transmission parameter of the first reference signal based on the first CSI. For example, the first CSI is a pre-coding matrix determined based on a codebook, and the network device determines the pre-coding matrix transmitted from the terminal device based on the same codebook, and uses this pre-coding matrix to beamform the first reference signal.

In an embodiment, in case of determining the first CSI based on the first model and the second reference signal, the first CSI is used for determining, by the network device, the second CSI based on the second model corresponding to the first model, and the second CSI is used for determining, by the network device, the transmission parameter of the first reference signal.

In an embodiment, in case that the terminal device determines the first CSI based on the first model and the second reference signal, the first CSI may be used for determining, by the network device, the second CSI, and the second CSI is used to determine the transmission parameter of the first reference signal. That is, the network device may determine the second CSI based on the first CSI feedback from the terminal, and then use the second CSI to determine the transmission parameter of the first reference signal.

In an embodiment, the terminal device receives the second reference signal transmitted from the network device, obtains the first CSI based on channel estimation of the second reference signal through a codebook-based CSI feedback method, and transmits the first CSI to the network device. The network device determines the transmission parameter of the first reference signal through the first CSI and the codebook.

In an embodiment mode, the terminal device receives the second reference signal transmitted from the network device, obtains the first CSI based on the first model and channel estimation on the second reference signal through the AI-based CSI feedback method, transmits the first CSI to the network device. The network device obtains the second CSI through the second model corresponding to the first model, and determines the transmission parameter of the first reference signal based on the second CSI. In an embodiment, in case of corresponding to the example in FIG. 1, the first model is the AI model corresponding to the CSI generation part on the UE side, and the second model is the AI model corresponding to the CSI reconstruction part on the network device side.

In an embodiment, the target object includes any one or a combination of:
the first model;
the second model;
a two-sided model composed of the first model and the second model; or
a method of determining the first CSI based on a codebook.

The method for determining CSI based on the codebook includes a method for determining the first CSI based on the codebook.

In an embodiment, the first model is deployed on the terminal device, and the second model is deployed on the network device.

In an embodiment, the first model and the second model have an association relationship.

The association relationship includes one or more of:
data sets used in the training of the first model and the second model having an association relationship;
data sets used in the training of the first model and the second model being the same;
a training data set used by one of the first model and the second model including data inferred based on the other model;
a training data set used by one of the first model and the second model including data inferred based on an association model corresponding to the other model;
a training data set used by one of the first model and the second model being a data set inferred from the other model;
a training data set used by one of the first model and the second model being a data set inferred based on an association model corresponding to the other model;
the first model and the second model having the same model identifier (ID);
the first model and the second model being jointly trained; or
the first model and the second model corresponding to the same configuration;
where the configuration includes: antenna configuration, CSI-RS resource configuration, CSI reporting configuration, CSI-RS resource set configuration, and resource configuration, etc.

For example, the training data set used in training the first model is determined based on the second model/a model (association model) corresponding to second model, or the training data set used in training the second model is determined based on the first model/a model (association model) corresponding to first model.

In an embodiment, the above association model is another model different from the first model and the second model.

The correspondence between the first model and the second model may include one of:
one first model corresponding to one second model;
one first model corresponding to multiple second models;
multiple first models corresponding to one second model; or,
multiple first models corresponding to multiple second models.

In an embodiment, there is a correspondence between the first reference signal and the target object.

In an embodiment, the correspondence between the first reference signal and the target object may be a direct correspondence between the first reference signal and the target object, or an indirect correspondence between the first reference signal and the target object, such as the correspondence between the first reference signal and CSI. Since CSI is determined and/or transmitted by the target object, determining the correspondence between the first reference signal and CSI is equivalent to determining the correspondence between the first reference signal and the target object, and different target objects may also be distinguished through CSI.

The number of the first reference signal may be one or more, and the number of the target object may be one or more. There is a correspondence between the first reference signals and the target objects, which means that each first reference signal has a corresponding target object, or each target object has a corresponding first reference signal. By establishing a correspondence between the first reference signal and the target object, the terminal device may associate each first reference signal with each target object.

In an embodiment, the target objects are multiple methods, such as the first method and the second method. The terminal device determines the first CSI-1 through the first method, determines the first CSI-2 through the second method, and transmits the first CSI-1 and the first CSI-2 to the network device. Multiple first reference signals transmitted from the network device are received, and the transmission parameter of each first reference signals is determined based on CSI determined by different target objects. The first reference signal corresponding to the target object is determined through the correspondence, or the target object corresponding to the first reference signal is determined through the correspondence.

In an embodiment mode, the target objects are multiple models, such as the first model 1 and the first model 2. The terminal device determines the first CSI-1 through the first model 1, determines the first CSI-2 through the first model 2, and transmits the first CSI-1 and the first CSI-2 to the network device. The first reference signal 1 and the first reference signal 2 transmitted from the network device are received. The transmission parameter of the first reference signal 1 is determined by the network device based on the first CSI-1 and the second model, and the transmission parameter of the first reference signal 2 is determined by the network device based on the first CSI-2 and the second model. The first reference signal corresponding to the target object is determined through the correspondence (such as first CSI-1 corresponding to first reference signal 1), or the first reference signal needing to correspond to the target object is determined through the correspondence (such as first reference signal 2 corresponding to first CSI-2).

In an embodiment mode, the target object is multiple models, such as the second model 1 and the second model 2. The terminal determines the first CSI through the first model and transmits the first CSI to the network device and receives the first reference signal 1 and the first reference signal 2 transmitted from the network device. The transmission parameter of the first reference signal 1 is determined by the network device based on the first CSI and the second model 1, and the transmission parameter of the first reference signal 2 is determined by the network device based on the first CSI and the second model 2. The first reference signal needing to correspond to the target object is determined through the correspondence (for example, the second model 1 corresponds to the first reference signal 1), or the target object needing to correspond to the first reference signal is determined through the correspondence (for example, the first reference signal 2 corresponds to the second model 2). In an embodiment, since different first reference signals correspond to different second models, the second model corresponding to each first reference signal may be distinguished without correspondence.

The above possible implementations may also be combined. For example, there are multiple first models on the terminal device side and multiple second models on the network device side, which are not be repeated here.

In an embodiment, evaluating the performance of the target object based on the received first reference signal includes:
evaluating the performance of the target object based on the received first reference signal and the correspondence.

In an embodiment, evaluating the performance of the target object based on the received first reference signal and the correspondence includes:
determining the target object corresponding to each received first reference signal based on the correspondence; or
determining the first reference signal corresponding to each target object based on the correspondence, and evaluating each target object based on the first reference signal corresponding to each target object.

In an embodiment, the method further includes:
determining the target object corresponding to each received first reference signal based on the correspondence; and
evaluating each target object based on each first reference signal.

In an embodiment, in case that multiple first reference signals are received, the target object corresponding to each first reference signal may be determined based on their correspondences.

For example, the first reference signal includes: CSI-R-1, CSI-R-2, and CSI-R-3; the target object includes: ML-1, ML-2, and ML-3. The correspondence includes: CSI-R-1 corresponding to ML-1, CSI-R-2 corresponding to ML-2, and CSI-R-3 corresponding to ML-3; the terminal device may determine that CSI-R-1 corresponds to ML-1, CSI-R-2 corresponds to ML-2, and CSI-R-3 corresponds to ML-3. The performance of ML-1 is evaluated through CSI-R-1, the performance of ML-2 is evaluated through CSI-R-2, and the performance of ML-3 is evaluated through CSI-R-3.

In an embodiment, the method further includes:
determining the first reference signal corresponding to each target object based on the correspondence; and
evaluating each target object based on the first reference signal corresponding to each target object.

For example, the first reference signal includes: CSI-R-1, CSI-R-2, and CSI-R-3; the models used to determine CSI include: ML-1, ML-2, and ML-3. CSI-R-1 corresponds to ML-1, CSI-R-2 corresponds to ML-2, and CSI-R-3 corresponds to ML-3. In the model, ML-2 is the target object, which means only ML-2 needs to be evaluated. The terminal device may determine CSI-R-2 corresponding to ML-2 and evaluate the performance of ML-2 through CSI-R-2. The terminal device does not need to determine the models/methods corresponding to all the first reference signals, but only needs to determine the first reference signal corresponding to the target object that needs to be evaluated and evaluate it.

In an embodiment, the correspondence between the first reference signal and the target object includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the method further includes one or more of:
receiving first indication information transmitted from the network device to indicate the correspondence;
transmitting second indication information to the network device to indicate the correspondence; or
determining the correspondence based on a pre-agreement with the network device.

In an embodiment, the correspondence refers to a correspondence between the first reference signal and the target object, that is, the method further includes one or more of:
receiving the first indication information transmitted from the network device to indicate the correspondence between the first reference signal and the target object;
transmitting second indication information to the network device to indicate the correspondence between the first reference signal and the target object; or
determining the correspondence between the first reference signal and the target object based on a pre-agreement with the network device.

In an embodiment, receiving the first indication information transmitted from the network device to indicate the correspondence means: a network device (such as a base station) indicates the correspondence between the first reference signal and the target object by transmitting the first indication information to the UE.

In an embodiment, the correspondence is determined by the network device.

In an embodiment, in case that the target object is a codebook-based CSI feedback method, the first indication information transmitted from the network device may indicate the correspondence between the first CSI and the first reference signal, that is, the correspondence between the codebook method used by the terminal device and the first reference signal.

In an embodiment, in case that the target object is a model-based CSI feedback method or model, the first indication information transmitted from the network device may indicate any one or a combination of:
a correspondence between the first CSI and the first reference signal (which may be determined by a correspondence among the first CSI, the second CSI, and the first reference signal);
a correspondence between the first model and the first reference signal;
a correspondence between the second CSI and the first reference signal;
a correspondence between the second model and the first reference signal; or
a correspondence between the two-sided model and the first reference signal.

For the correspondence between the first CSI and the first reference signal or the correspondence between the first model and the first reference signal, the terminal device may transmit the identification corresponding to the first CSI or the identification corresponding to the first model in case of transmitting the first CSI. The network device may transmit the identification corresponding to the first CSI corresponding to the first reference signal or the identification corresponding to the first model in case of transmitting the first reference signal.

In an embodiment, the terminal device may determine that performance of which CSI feedback algorithm, which AI model, or which AI models the first reference signal is used to evaluate, that is, evaluating performance of the target object corresponding to the first CSI.

For transmitting the second indication information indicating the correspondence to the network device, for example, the terminal device indicates associated information of the first reference signal corresponding to the target object to the network device through the second indication information. The network device transmits the first reference signal to the UE based on the second indication information, such as transmitting the first reference signal to the UE based on the resources indicated by the second indication information, and transmitting the identification information associated with the first reference signal. The identification information is used to determine the target object corresponding to the first reference signal.

In an embodiment, the correspondence is determined by the terminal device.

In an embodiment, in case that the target object is a codebook-based CSI feedback method, the second indication information transmitted from the terminal device may indicate the correspondence between the first CSI and the first reference signal, such as the first CSI-n corresponding to identification information n of the first reference signal, and the resource configuration of the first reference signal corresponding to the first CSI-n. The network device transmits the first reference signal based on the second indication information, such as transmitting the identification information n corresponding to the first reference signal n, or transmitting the corresponding first reference signal n on the resource configuration indicated by the second indication information. The terminal device may determine the correspondence between the first reference signal and the first CSI based on identification information n or resource configuration. The determination method that the second indication information indicates the correspondence between the first reference signal and the CSI, may refer to the method of second indication information indicating the correspondence between the first reference signal and the first CSI, which is not repeated here.

In an embodiment, in case that the target object is a model-based CSI feedback method or a model, the second indication information transmitted from the terminal device may indicate any one or a combination of:
a correspondence between the first CSI and the first reference signal;
a correspondence between the first model and the first reference signal;
a correspondence between the second CSI and the first reference signal;
a correspondence between the second model and the first reference signal; or
a correspondence between the two-sided model and the first reference signal.

In case that the target object is a model-based CSI feedback method or model, the indication method in case that the target object is a codebook-based CSI feedback method may be referred to. In an embodiment, in case that the second indication information indicates the correspondence between the second CSI and the first reference signal and/or the correspondence between the second model and the first reference signal, the terminal device side may set the correspondence in advance. For example, taking the second CSI as an example, the terminal device gives the correspondence between the second CSI-n and the first reference signal n, and the network device distinguishes and corresponds the second CSI-n and the first reference signal n according to the second indication information.

Determining the correspondence based on a pre-agreement with the network device means that both sides agree on the correspondence through a protocol or other means, such as pre-agreeing on the correspondence between the first reference signal and CSI.

For example, the association relationship between the agreed first reference signal and the first CSI.

For example, the beamformed reference signal at a given time interval from the first CSI is the first reference signal corresponding to the first CSI.

In an embodiment, the above examples are provided for the convenience of understanding the present application and should not constitute any limitation to the present application.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

The CSI information corresponding to the target object may include:
CSI report configuration information corresponding to the target object; and/or
CSI report resource information corresponding to the target object.

The above information is introduced below.
(1) The resource set corresponding to the first reference signal, the identification information of the resource set corresponding to the first reference signal, the transmission occasion corresponding to the resource set corresponding to the first reference signal, the identification information corresponding to the first reference signal, the transmission occasion corresponding to the first reference signal, the resource configuration information corresponding to the first reference signal, and the transmission occasion corresponding to the resource configuration information corresponding to the first reference signal may all be used to distinguish the first reference signal or the target object, to determine the correspondence between the target object and the first reference signal, determine the target object, or determine the first reference signal corresponding to the target object.

For example, a reference signal transmitted on the resource set n is the first reference signal n;
a reference signal transmitted on the resource set with identification information n is the first reference signal n; and
a reference signal transmitted for an nth time is the first reference signal n;
where n is greater than or equal to 1.

Regarding how to distinguish the first reference signal based on the transmission occasion corresponding to the resource set corresponding to the first reference signal, the identification information corresponding to the first reference signal, the resource configuration information corresponding to the first reference signal, and the transmission occasion corresponding to the resource configuration information corresponding to the first reference signal, the above examples may be referred to and is not repeated here.

In an embodiment, there is a correspondence between the target object and the resource set corresponding to the first reference signal, the identification information of the resource set corresponding to the first reference signal, the transmission occasion corresponding to the resource set corresponding to the first reference signal, the identification information corresponding to the first reference signal, the transmission occasion corresponding to the first reference signal, the resource configuration information corresponding to the first reference signal, or the transmission occasion corresponding to the resource configuration information corresponding to the first reference signal(the correspondence may be agreed upon, or indicated to the UE by the network device through the first indication information, or indicated to the network device by the terminal device through the second indication information). In case that the first indication information indicates the resource set corresponding to the first reference signal, the terminal device may determine which first reference signal corresponds to which target object. When evaluating the performance of a target object, the terminal device may determine the first reference signal corresponding to its target object. Alternatively, in case of using a first reference signal for evaluation, the terminal device may know that the currently used first reference signal is used to evaluate which target object.

(2) The identification information corresponding to the target object, the resource set corresponding to the target object, the resource set information corresponding to the target object, the transmission occasion corresponding to the resource set information corresponding to the target object, the resource configuration information corresponding to the target object, and the transmission occasion corresponding to the resource configuration information corresponding to the target object etc. may be used to determine the correspondence between the target object and the first reference signal, determine the target object, or determine the first reference signal corresponding to the target object.

Taking the identification information corresponding to the target object as an example, the target object or the first reference signal may be distinguished by ID, which may be used to determine the correspondence between the target object and the first reference signal, determine the correspondence between the target object and the first reference signal, determine the target object, or determine the first reference signal corresponding to the target object. For example, the network device may indicate the identification information of the target object corresponding to the first reference signal to the terminal device through the first indication information in the configuration information of the first reference signal or at the same time as the transmission of the first reference signal. The terminal device may then determine which target object the network device previously transmitted corresponds to through the first indication information. When evaluating the performance of a target object, the terminal device may determine the first reference signal corresponding to its target object. Alternatively, in case of using a first reference signal for evaluation, the UE may know that the currently used first reference signal is used to evaluate which target object.

Taking the resource set corresponding to the target object as an example, the correspondence between the target object and the first reference signal may be determined through the resource set corresponding to the target object, which may determine the correspondence between the target object and the first reference signal, determine the target object, or determine the first reference signal corresponding to the target object. For example, the network device may indicate the resource set corresponding to the target object to the terminal device, and the first reference signal corresponding to the target object is the reference signal corresponding to the resource included in the resource set. The terminal device may determine that the resource set corresponds to which target object based on the resource set corresponding to the first reference signal. When evaluating the performance of a target object, the terminal device may determine the first reference signal corresponding to its target object. Alternatively, in case of using a first reference signal for evaluation, the terminal device may know that the currently used first reference signal is used to evaluate which target object.

For the resource set corresponding to the target object, the resource set information corresponding to the target object, the transmission occasion corresponding to the resource set information corresponding to the target object, the resource configuration information corresponding to the target object, and the transmission occasion corresponding to the resource configuration information corresponding to the target object etc.:
in case that a target object needs to be transmitted between a terminal device and a network device, associated information of the resources occupied by the transmission of the target object may be used to distinguish different target objects, thereby determining the correspondence between the target object and the first reference signal, determining the correspondence between the target object and the first reference signal, determining the target object, or determining the first reference signal corresponding to the target object. The introduction of the first reference signal may be referred to, it is not repeated here; and
in case that a target object does not need to be transmitted between a terminal device and a network device, the network device and UE may pre-agree, or the network device or terminal device may configure the reference signal resource (resource set or resource configuration information, etc.) corresponding to the target object, and transmit the first reference signal on the reference signal resource corresponding to the target object. Taking the resource set corresponding to the target object as an example, in this case, the resource set corresponding to the target object refers to the resource used to transmit the first reference signal corresponding to the target object. For the resource set information corresponding to the target object, the transmission occasion corresponding to the resource set information corresponding to the target object, the resource configuration information corresponding to the target object, and the transmission occasion corresponding to the resource configuration information corresponding to the target object, examples of the resource set corresponding to the target object may be referred to, which is not repeated here.

(3) The CSI report configuration information corresponding to the first reference signal, the CSI report resource information corresponding to the first reference signal, the timing offset information between the transmission of CSI corresponding to the first reference signal and the transmission of the first reference signal, the CSI information corresponding to the target object, and the timing offset information between the transmission of CSI corresponding to the target object and the transmission of the first reference signal may be used to indicate the correspondence between the first reference signal and CSI.

For the CSI report configuration information corresponding to the first reference signal, it may include:
a CSI report configuration corresponding to the first reference signal; and/or
a transmission occasion of the CSI report configuration corresponding to the first reference signal.

For example, if the first reference signal n corresponds to CSI report configuration n, CSI report configuration n corresponds to CSI-n, and CSI-n corresponds to target object n, then the target object n corresponding to the first reference signal n may be determined based on the CSI report configuration n corresponding to the first reference signal n indicated by the first indication information or second indication information; and
in case that the first indication information indicates the CSI report configuration corresponding to the first reference signal and the transmission occasion corresponding to the CSI report configuration corresponding to the first reference signal, for example, the first reference signal corresponds to the most recent M-th first CSI report corresponding to the above information indicated by the base station to the UE before transmitting the first reference signal (where M is greater than or equal to 1).

For the CSI report resource information corresponding to the first reference signal, it may include:
a CSI report resource corresponding to the first reference signal; and/or
a transmission occasion of CSI report resource corresponding to the first reference signal.

The CSI report resource may include time-domain and/or frequency-domain resources used for CSI reporting.

For example, if the first reference signal n corresponds to CSI report resource information n, CSI report resource information n corresponds to CSI-n, and CSI-n corresponds to the target object n, then the target object n corresponding to the first reference signal n may be determined based on the CSI report resource information n corresponding to the first reference signal n indicated by the first indication information or second indication information; and
for the timing offset information between the transmission of CSI corresponding to the first reference signal and the transmission of the first reference signal, the first indication information or the second indication information indicates that the timing offset information between CSI-n and the transmission of the first reference signal n is Timing Offset-n, and if the timing offset between the transmission of the first reference signal n and the transmission of a CSI satisfies Timing Offset-n, then the CSI is CSI-n corresponding to the first reference signal n.

For example, the network device indicates the timing offset of the transmission occasion of the first CSI and the transmission occasion of the first reference signal to the UE.

For the CSI information corresponding to the target object, taking the CSI report configuration information corresponding to the target object as an example, the target object n corresponds to the CSI report configuration information n, the CSI report configuration information n corresponds to CSI-n, and CSI-n corresponds to the first reference signal n. The first reference signal n corresponding to the target object n may be determined based on the CSI report configuration information n corresponding to the target object n indicated by the first indication information or the second indication information. The CSI report resource information corresponding to the target object refers to the CSI report configuration information corresponding to the target object, which is not repeated here.

For example, taking the first indication information indicating the identification information corresponding to the target object as an example, the network device indicates to the UE the ID-n (identification information corresponding to the target object) of the model corresponding to the first reference signal n through the first indication information, and the CSI corresponding to the first reference signal is the CSI corresponding to the same ID.

For the timing offset information between the transmission of CSI corresponding to the target object and the transmission of the first reference signal, for example, the CSI corresponding to target object n is CSI-n, and the timing offset between the transmission of CSI corresponding to the target object and the transmission of the first reference signal is Timing Offset-n. The first reference signal after transmission Timing Offset-n in CSI-n corresponds to CSI-n.

In an embodiment, the above information may be flexibly combined and is not repeated here.

In an embodiment, the network device indicates one or more of the above contents in the first indication information, or the terminal device indicates one or more of the above contents in the second indication information.

In an embodiment, the network device may indicate a first reference signal corresponds to a target object to the terminal device through the first indication information; and/or
the terminal device indicates the first reference signal corresponding to the target object to the network device through the second indication information.

For example, the first reference signal n is associated with the target object n through the first indication information and/or the second indication information.

The information that may distinguish the first reference signal is associated with the information that may distinguish the target object through the first indication information and/or the second indication information. For example, the identification information corresponding to the first reference signal n is associated with the identification information corresponding to CSI-n.

In an embodiment, the network device may indicate to the terminal device that a first reference signal corresponds to a CSI, and determine the correspondence between the first reference signal and the target object through the correspondence between CSI and the target object; and/or
the terminal device may indicate to the network device that a first reference signal corresponds to a CSI, through the correspondence between CSI and the target object. The network device determines that a first reference signal corresponds to a target object.

In an embodiment, the first reference signal n may be associated with CSI-n through either the first indication information or the second indication information.

In an embodiment, the first reference signal n that satisfies a first condition may be associated with CSI-n through either the first indication information or the second indication information; or
the target object n that satisfies the first condition is associated with CSI-n through the first indication information or the second indication information, that is, the first reference signal corresponds to the CSI that meets the first condition.

For example, before transmitting the first reference signal, the network device indicates to the terminal device that the most recent M-th transmission of the first reference signal corresponds to the first CSI-M; and
before transmitting the first reference signal, the network device indicates to the UE that the first CSI corresponding to the set of reference signal resource corresponds to the first reference signal;
where M is greater than or equal to 1.

In an embodiment, the first condition is a time condition, which means that a time requirement is satisfied between the first CSI corresponding to the first reference signal and the first reference signal.

In an embodiment, the first reference signal corresponds to the CSI corresponding to the information (indicated by the first indication information or the second indication information) that satisfies the first condition; or
the first reference signal corresponds to the target object corresponding to the information (indicated by the first indication information or the second indication information) that satisfies the first condition.

For example, the first condition is a time condition, which means that a time requirement is satisfied between the first CSI corresponding to the first reference signal and the first reference signal.

For the way in which the base station indicates the CSI report configuration and/or transmission occasion corresponding to the first reference signal, in an embodiment, the base station indicates a rank of the first CSI corresponding to the first reference signal before transmitting the first reference signal.

In an embodiment, evaluating the performance of the target object based on the first reference signal includes:
determining a first performance metric corresponding to the first reference signal based on the first reference signal; and
evaluating the performance of the target object based on the first performance metric.

In an embodiment, measurement and other operations are performed on the first reference signal corresponding to the target object that needs to be evaluated to obtain various first performance metric corresponding to the first reference signal, and the target object is evaluated based on the first performance metric.

In an embodiment, the first performance metric includes at least one of:
reference signal received power (RSRP);
reference signal received quality (RSRQ);
a signal-to-interference-plus-noise ratio (SINR);
a system performance metric; or
a distribution metric.

In an embodiment, system performance metric refers to metrics monitored based on system performance, such as: throughput, first throughput, a second block error rate, a block error rate (BLER), a negative acknowledgment (NACK), and an acknowledgment (ACK), etc.

In an embodiment, the first block error rate may include a hypothesis BLER.

In an embodiment, the hypothesis BLER is a BLER determined based on mapping.

For example, the hypothesis BLER is determined based on the mapping of RSRP corresponding to the first reference signal to the physical downlink control channel (PDCCH) BLER.

For example, the association relationship between the RSRP corresponding to the first reference signal and the BLER corresponding to the physical uplink control channel (PUCCH) is established, the RSRP corresponding to the first reference signal is mapped to the BLER corresponding to the PUCCH, and the BLER value is the hypothesis BLER.

For example, the hypothesis BLER is determined based on the mapping of SINR corresponding to the first reference signal to PDCCH BLER.

In an embodiment, it may be the throughput calculated using Shannon formula.

In an embodiment, the first throughput may include a hypothesis throughput.

In an embodiment, the hypothesis throughput is a throughput determined based on mapping.

For example, the hypothesis throughput is determined based on the mapping of the throughput from the RSRP corresponding to the first reference signal to the physical uplink shared channel (PUSCH).

For example, the association relationship between the SINR corresponding to the first reference signal and the throughput corresponding to PUSCH is established, the SINR corresponding to the first reference signal is mapped to the throughput corresponding to PUSCH, and the throughput value is the hypothesis throughput.

For example, the hypothesis throughput is determined based on the mapping of SINR corresponding to the first reference signal to PUSCH throughput.

For the precision metric:
the precision metric may include any one or a combination of:
generalized cosine similarity (GCS);
squared generalized cosine similarity (SGCS);
a mean square error (MSE); or
a normalized mean square error (NMSE).

The precision metric may also include other parameter metrics that may represent accuracy, which is not repeated here.

For the distribution metric, it refers to the channel distribution corresponding to the first reference signal, such as distance.

The first performance metric may also include other metrics, such as model monitoring based on traditional CSI: scheme based on additional traditional CSI report; monitoring based on input-output data: for example, data drift between based on a dataset training and an observation dataset, monitoring based on output distribution, etc. The related art may be referred to, which is not listed one by one here.

In an embodiment, evaluating the performance of the target object based on the first performance metric includes any one or a combination of:
evaluating the performance of the target object based on the first performance metric and a first value range;
evaluating the performance of the target object based on the first performance metric and a performance metric corresponding to a reference object; or
evaluating the performance of the target object based on the first performance metric and one or more performance metrics corresponding to a reference signal, where a number of the reference signal is one or more.

1. performance of the target object is evaluated based on the first performance metric and a first value range:
   performance of the target object is evaluated based on a comparison between the first performance metric corresponding to the first reference signal and the first value range:
   if the first performance metric is within the first value range, the performance is better, and/or, if the comparison is beyond the first value range, the performance is poor; or, if the first performance metric is beyond the first value range, the performance is better, and/or if the first performance metric is within the first value range, the performance is poor; and/or,
   the target object is available if the first performance metric is within the first value range, and/or the target object is unavailable if the first performance metric is beyond the first value range; or, the target object is available if the first performance metric is beyond the first value range, and/or, the target object is unavailable if the first performance metric is within the first value range; and/or,
   if the first performance metric is beyond the first value range, the AI/ML model fails; or if the first performance metric is within the first value range, the AI/ML model fails.

In an embodiment, the association relationship between performance of the target object (availability, failure) and the first value range depends on the specific index used for the first performance metric.

In an embodiment, the first value range may correspond to one or more threshold values, where the first value range is the value range corresponding to the threshold:
the performance of the model is evaluated based on the comparison between the first performance metric corresponding to the first reference signal and the threshold, for example, taking there being a threshold as an example:
if the first performance metric is greater than the threshold, performance of the target object is better, and/or if the first performance metric is less than the threshold, performance of the target object is poor; or, if the first performance metric is less than the threshold, performance of the target object is better, and/or if the first performance metric is greater than the threshold, performance of the target object is poor; and/or,
if the first performance metric is greater than the threshold, the target object is available, and/or if the first performance metric is less than the threshold, the target object is unavailable; or, if the first performance metric is less than the threshold, the target object is available, and/or if the first performance metric is greater than the threshold, the target object is unavailable; and/or,
if the first performance metric is greater than the threshold, the target object (such as AI/ML model) fails; or if the first performance metric is less than the threshold, the target object (such as AI/ML models) will fail.

2. Performance of the target object is evaluated based on the first performance metric and one or more performance metrics corresponding to a reference signal, where a number of the reference signal is one or more.

In an embodiment, in case that the reference signal includes multiple reference signals, one of the reference signals corresponds to one performance metric.

Performance of the target object is evaluated based on the comparison between the first performance metric corresponding to the first reference signal and the performance metric of the reference signal.

In an embodiment, the network device may transmit a reference signal to the terminal device, either before or after any current step of the network device.

The performance metric of the reference signal may be determined in the following ways:
determining a channel estimation value based on the reference signal, determine CSI based on the channel estimation value, and determine the performance metric of the reference signal based on the CSI; and
determining a performance metric based on an effective channel obtained by pre-coding the channel estimation value corresponding to the reference signal using the CSI.

The reference signal is a reference signal different from the first reference signal, which may include any one or a combination of:
a second reference signal, which is a reference signal used for estimating the raw channel;
beamforming the reference signal corresponds to the CSI determined by another model, that is, the reference signal is the beamformed reference signal corresponding to another model;
beamforming the reference signal corresponds to the CSI determined based on another CSI feedback method; and
in an embodiment, in case of combination, there are multiple reference signals, and each reference signal may not be completely identical.

For example, the reference signal is the beamformed reference signal corresponding to a codebook-based CSI feedback based on the codebook; that is, beamforming the reference signal is determined based on fifth CSI, which is the CSI fed back in the codebook-based CSI feedback method.

3. Performance of the target object is evaluated based on the first performance metric and a performance metric corresponding to a reference object.
(1) Another model is used as a reference object:
   performance of the target object is evaluated by a comparison of the first performance metric corresponding to the first reference signal and the performance metric of another model;
   a first performance metric of the first reference signal and a performance metric of another model are determined and compared:
      if the first performance metric is better than the performance metric of another model, performance of the target object is better, and/or if the first performance metric is worse than the performance metric of another model, performance of the target object is poor; and/or,
      if the first performance metric is better than the performance metric of another model, the target object is available, and/or if the first performance metric is worse than the performance metric of another model, the target object is unavailable; and/or
      if the first performance metric is worse than the performance metric of another model, the target object fails; and/or,
      if the first performance metric is better than the performance metric of another model, it is considered that the target object is better than the other model.
(2) Another method is used as a reference:
   performance of the target object is evaluated based on a comparison of the performance metric corresponding to the first reference signal with the performance metric corresponding to another method; another method may include at least one of: methods for determining CSI, methods for transmitting CSI, and methods for feedback CSI.

Taking the reference object as another CSI feedback method as an example:
a performance metric of the first reference signal and a performance metric of another CSI feedback method are determined and compared:
if the first performance metric is better than the performance metric of another CSI feedback method, performance of the target object is better, and/or if the first performance metric is worse than the performance metric of another CSI feedback method, performance of the target object is poor; and/or,
if the first performance metric is better than the performance metric of another CSI feedback method, the target object is available, and/or if the first performance metric is worse than the performance metric of another CSI feedback method, the target object is unavailable;
if the first performance metric is worse than the performance metric of another CSI feedback method, the target object fails; and
if the first performance metric is better than the performance metric of another CSI feedback method, it is considered that the target object is better than the other CSI feedback method.

In an embodiment, in case that the target object is a model, evaluating the performance of the target object includes: evaluating the performance of the first model; evaluating the performance of the second model; and evaluating the performance of the model pair composed of the first model and the second model.

For example, in case that the target object includes a two-sided model composed of the first model and the second model:
the terminal device evaluates the performance of the model pair composed based on the first model and the second model based on the first reference signal, which may include:
the terminal device determines the first performance metric corresponding to the first reference signal, and evaluates the performance of the model pair composed of the first model and the second model based on the first performance metric.

If the first AI model and the second AI model are considered as a two-sided model, with the first AI model being a part of the two-sided model and the second AI model being another part of the two-sided model, then the performance of the two-sided model may be evaluated.

In an embodiment, in case that the first performance metric includes a distribution metric, performance of the target object is evaluated based on the channel distribution corresponding to the first reference signal, where the first reference signal may include multiple reference signals.

For example, for a reference signal for a period of time;
if it deviates from the reference distribution, the performance is poor; otherwise, the performance is better; and/or,
if it deviates from the reference distribution, the model is not useful; otherwise, the model is useful; and/or,
if it deviates from the reference distribution, the model fails.

In an embodiment, the method further includes:
transmitting an evaluation result to the network device.

In an embodiment, the evaluation result is transmitted to the network device for the network device to perform relevant operations (such as decision-making).

In the method for performance evaluation provided in embodiments of the present application, by receiving the first reference signal transmitted from the network device, the CSI determined by the target object and/or the CSI transmitted by the target object corresponds to the transmission parameter of the first reference signal. The CSI determined by the target object and/or the CSI transmitted by the target object may be reflected by the first reference signal. Evaluating the performance of the target object through the first reference signal may achieve low-overhead evaluation of the target object and evaluation of multiple target objects.

FIG. 3 is a second schematic flowchart of a method for performance evaluation according to an embodiment of the present application. As shown in FIG. 3, embodiments of the present application provide a method for performance evaluation performed by a network device, including:
step 210: transmitting a first reference signal to a terminal device, where a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

In an embodiment, for the introduction of the first reference signal, target object, CSI, and transmission parameter, the previous section may be referred to, which is not repeated here.

In the method for performance evaluation provided in embodiments of the present application, by transmitting the first reference signal to the terminal device, the CSI determined by the target object and/or the CSI transmitted by the target object corresponds to the transmission parameter of the first reference signal. The CSI determined by the target object and/or the CSI transmitted by the target object may be reflected by the first reference signal. Evaluating the performance of the target object through the first reference signal may achieve low-overhead evaluation of the target object and evaluation of multiple target objects.

In an embodiment, the transmission parameter includes at least one of:
a transmission position;
a beamforming parameter; or
resource configuration.

The introduction of transmission position, beamforming parameter, and resource configuration, the previous section may be referred to the introduction mentioned above, which is not repeated here.

In an embodiment, the target object includes any one or a combination of:
a method for determining CSI;
a method for transmitting CSI; or
a model for determining CSI.

For the introduction of methods used to determine CSI, methods used to transmit CSI, and models used to determine CSI, the previous section may be referred to, which is not repeated here.

In an embodiment, there is a correspondence between the first reference signal and the target object.

The introduction of the correspondence between the first reference signal and the target object, the previous section may be referred to the introduction mentioned above, which is not repeated here.

In an embodiment, the method further includes one or more of:
transmitting first indication information to the terminal device to indicate the correspondence;
receiving second indication information transmitted from the terminal device to indicate the correspondence; or
determining the correspondence based on a pre-agreement with the terminal device.

In an embodiment, receiving the first indication information transmitted from the network device to indicate the correspondence means: a network device (such as a base station) indicates the correspondence between the first reference signal and the target object by transmitting the first indication information to the UE.

In an embodiment, the correspondence is determined by the network device.

For example, the network device indicates the correspondence between the first reference signal and the CSI corresponding to the target object (hereinafter referred to as the target CSI) through the first indication information to the UE. The UE determines the correspondence between the first reference signal and the target CSI based on the first indication information. The target object corresponds to the target CSI, and the number of target CSI corresponding to a target object may be one or more. For example, the target object may correspond to a first CSI, or the target object may correspond to a first CSI and a second CSI.

For example, the network device indicates the resource set corresponding to the first reference signal to the terminal device through the first indication information, and the terminal device may determine which first reference signal corresponds to which target object based on the first indication information. When evaluating the performance of a target object, UE may determine the first reference signal corresponding to its target object. Alternatively, in case of using a first reference signal for evaluation, the terminal device may know that the currently used first reference signal is used to evaluate which target object.

For example, the network device may indicate the identification information of the target object corresponding to the first reference signal to the terminal device through the first indication information in the configuration information of the first reference signal or at the same time as the transmission of the first reference signal. The terminal device may then determine which target object the network device previously transmitted corresponds to through the first indication information. When evaluating the performance of a target object, the terminal device may determine the first reference signal corresponding to its target object. Alternatively, in case of using a first reference signal for evaluation, the terminal device may know that the currently used first reference signal is used to evaluate which target object.

In an embodiment, the terminal device determines the target object corresponding to the first reference signal based on the correspondence between the first reference signal and the CSI corresponding to the target object. That is, the first reference signal is used to evaluate the performance of which CSI feedback algorithm, which AI model, or which AI model (to evaluate performance of the target object corresponding to CSI).

Way 1-1: the network device configures one or more pieces of the following information corresponding to the target CSI in the first indication information corresponding to the first reference signal:
identification information (e.g. ID) of the first reference signal and/or a transmission occasion corresponding to the first reference signal;
identification information (e.g. ID) of the first reference signal resource set and/or a transmission occasion corresponding to the first reference signal; or
first reference signal resource configuration information and/or a transmission occasion corresponding to the first reference signal; and
CSI corresponding to the target object corresponding to the first reference signal includes: CSI corresponding to the above information. For example, the first reference signal corresponds to the CSI corresponding to the reference signal (e.g., CSI is determined based on the reference signal identified by the reference signal).

In an embodiment, the first reference signal corresponds to the CSI that satisfies the first condition and corresponds to the above information. For example, the first reference signal corresponds to the first CSI corresponding to the most recent M-th reference signal/reference signal resource set indicated by the network device to the UE before transmitting the first reference signal (where M is greater than or equal to 1). For example, the first condition is a time condition, which means that a time requirement is satisfied between the CSI corresponding to the first reference signal and the first reference signal.

The network device indicates the correspondence between the first reference signal and the CSI report configuration information and/or the time-domain and/or frequency-domain resource information of the CSI report to the terminal device. The CSI corresponding to the first reference signal includes: the CSI corresponding to the CSI report configuration information and/or the CSI resource information in the time and/or frequency domain of the CSI report.

For example, the CSI report configuration information corresponding to the first reference signal and/or a transmission occasion corresponding to the first reference signal is indicated.

In an embodiment, the first reference signal corresponds to the CSI that satisfies the first condition and corresponding to the above information. For example, the first reference signal corresponds to the most recent M-th CSI report indicated by the network device to the UE before transmitting the first reference signal (where M is greater than or equal to 1). For example, the first condition is a time condition, which means that a time requirement is satisfied between the CSI corresponding to the first reference signal and the first reference signal.

For the way in which the network device indicates the CSI report configuration information and/or transmission occasion corresponding to the first reference signal, in an embodiment, the network device indicates a rank of the CSI corresponding to the first reference signal before transmitting the first reference signal.

Way 1-3: the network device indicates the identification information of the target object corresponding to the first reference signal to the terminal device.

For example, the network device indicates the ID of the model corresponding to the first reference signal to the terminal device, and the CSI corresponding to the first reference signal is the CSI corresponding to the same model ID.

Way 1-4: the network device indicates the timing offset (timing offset information) of the transmission occasion of CSI and the transmission occasion of the first reference signal to the terminal device.

For receiving the second indication information transmitted from the terminal device to indicate the correspondence, in an embodiment, the correspondence is determined by the terminal device.

In an embodiment, the UE indicates the associated information of the first reference signal corresponding to the target object to the network device through the second indication information; and
the network device may determine at least one of the following based on the second indication information:
a correspondence between the target object and the first reference signal;
a correspondence between the first reference signal and the CSI corresponding to the target object; or
a time-domain and/or frequency-domain resource corresponding to the transmission of the first reference signal of the target object.

Some examples are introduced below.

Way 2-1: the UE indicates the identification information corresponding to the target object to the network device through the second indication information; or
the UE indicates the identification information, such as identity (ID) corresponding to the CSI corresponding to the target object to the network device through the second indication information.

The network device indicates, based on the second indication information, the identification information (such as ID) corresponding to the first reference signal in case of transmitting the first reference signal. The CSI corresponding to the same identification information (such as ID) corresponds to the first reference signal, or the target object corresponding to the same identification information (such as ID) corresponds to the first reference signal.

Some examples of identification information include: the resource ID corresponding to the first reference signal, and the resource set ID corresponding to the first reference signal.

Way 2-2: the UE indicates the resource configuration information (time-domain and/or frequency-domain resource, signal resource, channel resource, etc.) of the first reference signal corresponding to CSI to the network device through the second indication information; or
the UE indicates the resource configuration information of the first reference signal corresponding to the target object to the network device through the second indication information.

Resource allocation information may include: time domain and/or frequency domain resource, signal resource, channel resource, etc.

For example, the network device is configured with multiple pieces of time domain and/or frequency domain resource information for the first reference signal. When the UE indicates the time domain and/or frequency domain resource of the first reference signal corresponding to the first CSI to the network device through the second indication information, it selects the time domain and/or frequency domain resource indicated by the second indication information from the multiple pieces of time domain and/or frequency domain resource information to transmit the first reference signal. The UE may determine the first CSI corresponding to the first reference signal by receiving the time domain and/or frequency domain resources of the first reference signal.

For example, the UE indicates the resource set corresponding to the first reference signal to the network device through the second indication information. The network device may determine which resource set corresponds to which first reference signal based on the second indication information and transmit the first reference signal on the corresponding resource set. UE may determine the target object corresponding to the first reference signal based on the resource set corresponding to the first reference signal. When evaluating the performance of a target object, UE may determine the first reference signal corresponding to its target object. Alternatively, in case of using a first reference signal for evaluation, the UE may know that the currently used first reference signal is used to evaluate which target object.

Way 2-3: the UE indicates the model associated information (such as model ID, etc.) corresponding to the first reference signal to the network device through the second indication information.

In an embodiment, the above indication information and the first CSI are transmitted together.

In an embodiment, the above indication information is not transmitted together with the first CSI, but the first CSI has an agreed (e.g. protocol-agreed) association relationship with the above information. (For example, the agreed time domain relationship).

For example, if the UE indicates the identification information of the target object corresponding to the first reference signal to the network device through the second indication information, and the network device indicates, based on the second indication information, the identification information of the target object corresponding to the first reference signal to the UE through the configuration information of the first reference signal or at the same time as the transmission of the first reference signal, the UE may determine that the first reference signal currently transmitted by the network device corresponds to which target object through the first indication information. When evaluating the performance of a target object, the UE may determine the first reference signal corresponding to its target object. Alternatively, in case of using a first reference signal for evaluation, the UE may know that the currently used first reference signal is used to evaluate which target object.

For determining the correspondence based on a pre-agreement with the terminal device, the network device and the terminal device transmit the first reference signal according to the pre-agreed correspondence between the first reference signal and the target object. For example, the network device transmits the first reference signal on the pre-agreed resource, transmits the corresponding identification information in case of transmitting the first reference signal, etc. The terminal device determines the target object corresponding to the first reference signal or the first reference object required to evaluate the target object based on the pre-agreement.

For example, the network device and the terminal device pre-agree the association relationship between the first reference signal and the first CSI, where the first CSI corresponds to the target object:
a beamformed reference signal at a given time interval from the first CSI is the first reference signal corresponding to the first CSI.

In an embodiment, the above introduction may be mutually referenced and supplemented with the introduction on the terminal side.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, before transmitting the first reference signal to the terminal device, the method further includes:
transmitting a second reference signal to the terminal device;
receiving first CSI determined based on the second reference signal transmitted from the terminal device; and
determining the transmission parameter of the first reference signal based on the first CSI.

In an embodiment, determining the transmission parameter of the first reference signal based on the first CSI includes:
determining the transmission parameter of the first reference signal based on a codebook and the first CSI; or
determining second CSI based on a second model and the first CSI, and determining the transmission parameter of the first reference signal based on the second CSI.

In an embodiment, the network device transmits a second reference signal to the terminal device, which receives the second reference signal transmitted from the network device. The terminal device processes the second reference signal using a codebook-based CSI feedback method (target object) to obtain the first CSI. The terminal device transmits the first CSI to the network device, which determines the transmission parameter of the first reference signal through the first CSI. The network device then transmits the first reference signal to the terminal device.

In an embodiment, the network device transmits the second reference signal to the terminal device, the terminal device receives the second reference signal transmitted from the network device, processes the second reference signal based on the first model through the model-based CSI feedback method, and obtains the first CSI. The terminal device transmits the first CSI to the network device, the network device obtains the second CSI through the second model, determines the transmission parameter of the first reference signal based on the second CSI, and the network device transmits the first reference signal to the terminal device. In an embodiment, the target object may include a first model, a second model, or a model pair composed of the first model and the second model. In an embodiment, the first model is used to determine the first CSI, the second model is used to determine the second CSI, and both the first CSI and the second CSI correspond to the first reference signal.

In an embodiment, the target object includes any one or a combination of:
a first model, where the first model is a model corresponding to the second model and used for the terminal device to determine the first CSI;
the second model;
a two-sided model composed of the first model and the second model; or
a method of determining the first CSI based on a codebook.

The method for determining the first CSI based on the codebook includes a method for determining the first CSI based on the codebook.

In an embodiment, for the correspondence between the first model, the second model, the first model and the second model, the previous section may be referred to, which is not repeated here.

In an embodiment, the method further includes:
receiving an evaluation result transmitted from the terminal device.

In an embodiment, the network device may receive the evaluation result transmitted from the terminal device and perform subsequent operations such as decision-making based on the evaluation result. Embodiments of the present application do not limit the subsequent operations of the network device and may refer to the related art, which is not repeated here.

Below, the method for performance evaluation provided by the embodiments of the present application is introduced through multiple examples.

### Embodiment I

Taking the CSI feedback method based on AI models as an example for introduction, other models (such as ML models and non-artificial intelligence models) have the same methods and are not be repeated here. The first AI model below is a possible implementation of the first model, and the second AI model is a possible implementation of the second model. The network device is a base station.

The base station transmits a second reference signal.

UE receives the second reference signal.

The UE determines the first CSI based on the second reference signal and the first AI model.

The UE transmits the first CSI.

The base station receives the first CSI.

The base station determines the second CSI based on the first CSI and the second AI model.

The base station transmits the first reference signal based on the second CSI.

The UE receives the first reference signal.

The UE evaluates the performance of AI-based CSI feedback method based on the first reference signal, or evaluates the performance of the first AI model/second AI model/first AI model and second AI model pair based on the first reference signal.

In an embodiment, the base station transmits the first reference signal based on the second CSI, including:
the base station determines the beamforming parameter of the first reference signal based on the second CSI, and transmits the first reference signal based on the beamforming parameters.

In an embodiment, the first AI model and the second AI model have an association relationship.

The association relationship includes one or more of:
the datasets used for training the two models having an association relationship;
a same dataset;
a training set used for one of the models including data inferred from another model or a model (corresponding to the another model);
a training set used for one of the models being dataset inferred based on another model or a model (corresponding to the another model)(for example, the training dataset used to train the first AI model is determined based on the second AI model/an AI model corresponding to the second AI model, or the training dataset used to train the second AI model is determined based on the first AI model/an AI model corresponding to the first AI model);
two models having the same model ID;
two models being jointly trained;
two models corresponding to the same configuration (antenna configuration, CSI-RS resource configuration, CSI reporting configuration, CSI-RS resource set configuration, and resource configuration, etc.).

A correspondence between the first AI model and the second AI model may be:
one to one (one first AI model corresponding to one second AI model);
one to many (one first AI model corresponding to multiple second AI models);
multiple to one (multiple first AI models corresponding to a second AI model); or,
multiple to multiple (multiple first AI models corresponding to multiple second AI models).

The UE evaluates, based on the first reference signal, the performance of the AI-based CSI feedback method, which may include:
the UE determines the first performance metric corresponding to the first reference signal, and evaluates the performance of the AI-based CSI feedback method based on the first performance metric.

The UE evaluates the performance of the first AI model based on the first reference signal, which may include:
the UE determines the first performance metric corresponding to the first reference signal and evaluates the performance of the first AI model based on the first performance metric.

The UE evaluates the performance of the second AI model based on the first reference signal, which may include:
the UE determines the first performance metric corresponding to the first reference signal and evaluates the performance of the second AI model based on the first performance metric.

The UE evaluates the performance of the two-sided model based on the first AI model and the second AI model using the first reference signal, which may include:
the UE determines the first performance metric corresponding to the first reference signal, and evaluates the performance of a first AI model and the second AI model pair based on the first performance metric.

If the first AI model and the second AI model are regarded as one AI model, that is, a two-sided model composed of the first model and the second model, the first AI model is a part of the two-sided model, and the second AI model is another part of the two-sided model, then the target object may be a two-sided model composed of the first model and the second model.

Examples of the first performance metric include:
RSRP;
RSRQ;
SINR;
hypothesis BLER;
hypothesis throughput;
a precision metric; or
a distribution metric.

Hypothesis BLER:
for example: an association relationship between the RSRP of the signal and the BLER corresponding to the PUCCH is established, the RSRP corresponding to the first reference signal is mapped to the BLER corresponding to the PUCCH, and the BLER value is the hypothesis BLER.

Hypothesis throughput:
for example: a throughput is calculated based on the received SINR of the first reference signal, which is the hypothesis throughput. In an embodiment, it may be the throughput calculated through Shannon's formula.

Precision metric:
for example, SGCS, GCS, NMSE, and MSE, etc.; and
the accuracy metrics include: the precision metric determined based on the third CSI corresponding to the first CSI, and the fourth CSI corresponding to the first reference signal determined by the UE.

The fourth CSI corresponding to the first reference signal is CSI determined by the UE based on the channel corresponding to the first reference signal, and the third CSI is the CSI used to determine the first CSI (e.g., the input CSI of the second AI/ML model).

Distribution metrics: the distribution of corresponding channels, such as distance, etc.

It cannot be ruled out that there may be other metrics.

A method for performance evaluation is introduced below. For ease of description, the first performance metric is represented as Q1.

When the target object is an AI-based CSI feedback method, the following are some methods for the UE to evaluate performance of the target object based on the first performance metric.

Method 1: performance of the target object is evaluated based on the comparison between the first performance metric and the threshold, where the target object is a CSI feedback method based on AI models, for example:
if the first performance metric is greater than the threshold, the performance is better, and/or if the first performance metric is less than the threshold, the performance is poor; or, if the first performance metric is less than the threshold, the performance is better, and/or if the first performance metric is greater than the threshold, the performance is poor; and/or,
if the first performance metric is greater than the threshold, it may be used, and/or if the first performance metric is less than the threshold, it is unavailable; or if the first performance metric is less than the threshold, it is available, and/or if the first performance metric is greater than the threshold, it is unavailable.

The first performance metric being RSRP/SINR/throughput/hypothesis throughput is taken as an example. Q1 is the RSRP/SINR/throughput/hypothesis throughput correspond to the first reference signal. The RSRP of the first reference signal is compared with the first threshold value T1. If Q1>=T1, it indicates that performance of AI-based CSI feedback methods is better; if Q1< T1, it indicates that performance of AI-based CSI feedback method is poor, or indicates that the AI-based CSI feedback method fails.

Taking the first performance metric being the hypothesis BLER as an example: Q1 is the hypothesis BLER corresponding to the channel state information corresponding to the first reference signal. If Q1<=T1, it indicates that performance of the AI-based CSI feedback method is better; if Q1> T1, it indicates that performance of AI-based CSI feedback method is poor, or indicates that the AI-based CSI feedback method fails.

Taking the first performance metric being SGCS/GCS/NMSE/MSE as an example: Q1 may be the SGCS/GCS/NMSE/MSE calculated based on the CSI obtained from the first reference signal (e.g. channel estimation value) and the CSI obtained from the second reference signal (e.g. effective channel obtained by processing the channel estimation value). If Q1<=T1, it indicates that performance of the AI-based CSI feedback method is better; if Q1> T1, it indicates that performance of AI-based CSI feedback method is poor, or indicates that the AI-based CSI feedback method fails.

Taking the first performance metric being the distribution parameter as an example: Q1 may be the distribution parameter corresponding to the first reference signal (e.g. the distribution parameter corresponding to the channel estimation of the first reference signal). For some distribution parameters, if Q1<=T1, it indicates that performance of the AI-based CSI feedback method is better; if Q1> T1, it indicates that performance of AI-based CSI feedback method is poor, or indicates that the AI-based CSI feedback method fails. For distribution parameters, if Q1>=T1, it indicates that performance of the AI-based CSI feedback method is better; if Q1<T1, it indicates that performance of AI-based CSI feedback method is poor, or indicates that the AI-based CSI feedback method fails.

Method 2: performance of the target object is evaluated based on the comparison between the first performance metric and the second performance metric corresponding to the second reference signal, where the target object is a CSI feedback method based on an AI model (The behavior on the base station side involves transmitting a second reference signal to the UE, which may be done before or after any current step on the base station side).

For ease of description, the second performance metric is represented as Q2.

In an embodiment, the second performance metric is of the same type as the first performance metric.

The second performance metric may be determined in the following ways:
determining the channel estimation value based on the second reference signal, determining the third CSI based on the channel estimation value, and determining the second performance metric based on the third CSI; and
determining a performance metric based on an effective channel obtained by pre-coding the channel estimation value corresponding to the second reference signal using the third CSI.

Taking the performance metric (first performance metric and second performance metric) as RSRP/SINR/throughput/hypothesis throughput as an example. Q1 is the RSRP/SINR/throughput/hypothesis throughput corresponding to the first reference signal, and Q2 is the RSRP/SINR/throughput/hypothesis throughput corresponding to the second reference signal. If Q1>=Q2, it indicates that performance of the AI-based CSI feedback method is better; if Q1< Q2, it indicates that performance of AI-based CSI feedback method is poor, or indicates that the AI-based CSI feedback method fails.

Taking the performance metric being hypothesis BLER as an example: Q1 is the hypothesis BLER corresponding to the channel state information corresponding to the first reference signal, and Q2 is the hypothesis BLER corresponding to the channel state information corresponding to the second reference signal. If Q1<=Q2, it indicates that performance of the AI-based CSI feedback method is better; if Q1> Q2, it indicates that performance of AI-based CSI feedback method is poor, or indicates that the AI-based CSI feedback method fails.

Taking performance metric being a distribution parameter as an example: Q1 may be the distribution parameter corresponding to the first reference signal (e.g. the distribution parameter corresponding to the channel estimation of the first reference signal), and Q2 may be the distribution parameter based on the second reference signal. For distribution parameters, if Q1<=Q2, it indicates that performance of the AI-based CSI feedback method is better; if Q1> Q2, it indicates that performance of AI-based CSI feedback method is poor, or indicates that the AI-based CSI feedback method fails. For some distribution parameters, if Q1>=Q2, it indicates that performance of the AI-based CSI feedback method is better; if Q1< Q2, it indicates that performance of AI-based CSI feedback method is poor, or indicates that the AI-based CSI feedback method fails.

Method 3: performance of the target object is evaluated based on the comparison between the first performance metric and the third performance metric corresponding to the third reference signal, where the target object is a CSI feedback method based on an AI model.

In an embodiment, beamforming the third reference signal corresponds to the CSI determined by the third AI model.

That is, the third reference signal is the beamformed reference signal corresponding to the third AI model.

In an embodiment, beamforming the third reference signal corresponds to CSI determined based on another CSI feedback method.

For example, the third reference signal is the beamformed reference signal corresponding to the codebook-based CSI feedback method; that is, beamforming the third reference signal is determined based on the fifth CSI, which is the CSI fed back under the codebook-based CSI feedback method.

For ease of description, the third performance metric is represented as Q3.

Some examples include the following.

Taking the performance metric (first performance metric and third performance metric) being RSRP/SINR/throughput/hypothesis throughput as an example: Q1 is the RSRP/SINR/throughput/hypothesis throughput corresponding to the first reference signal, and Q3 is the RSRP/SINR/throughput/hypothesis throughput corresponding to the third reference signal. If Q1>=Q3, it indicates that performance of the target object is better; if Q1 < Q3, it indicates that performance of AI-based CSI feedback method is poor, or indicates that the AI-based CSI feedback method fails.

Taking the performance metric being hypothesis BLER as an example: Q1 is the hypothesis BLER corresponding to the channel state information corresponding to the first reference signal, and Q3 is the hypothesis BLER corresponding to the channel state information corresponding to the third reference signal. If Q1<=Q3, it indicates that performance of the AI-based CSI feedback method is better; if Q1> Q3, it indicates that performance of AI-based CSI feedback method is poor, or indicates that the AI-based CSI feedback method fails.

Taking performance metric being SGCS/GCS/NMSE/MSE as an example. Q1 may be the SGCS/GCS/NMSE/MSE calculated based on the CSI obtained from the first reference signal (e.g. channel estimation value) and the CSI obtained from the third reference signal (e.g. effective channel obtained by processing the channel estimation value). Q3 is the SGCS/GCS/NMSE/MSE calculated based on the CSI obtained from the third reference signal (e.g. channel estimation value) and the CSI obtained from the third reference signal (e.g. effective channel obtained by processing the channel estimation value). If Q1<=Q3, it indicates that performance of the AI-based CSI feedback method is better; if Q1> Q3, it indicates that performance of AI-based CSI feedback method is poor, or indicates that the AI-based CSI feedback method fails.

Taking performance metric being a distribution parameter as an example: Q1 may be the distribution parameter corresponding to the first reference signal (e.g. the distribution parameter corresponding to the channel estimation of the first reference signal), and Q3 is the distribution parameter corresponding to the third reference signal. For distribution parameters, if Q1<=Q3, it indicates that performance of the AI-based CSI feedback method is better; if Q1> Q3, it indicates that performance of AI-based CSI feedback method is poor, or indicates that the AI-based CSI feedback method fails. For some distribution parameters, if Q1>=Q3, it indicates that performance of the AI-based CSI feedback method is better; if Q1< Q3, it indicates that performance of AI-based CSI feedback method is poor, or indicates that the AI-based CSI feedback method fails.

Method 4: performance of the target object is evaluated based on the comparison between the first performance metric and the performance metric of another AI model. The target object is the CSI feedback method based on AI, and the reference object is another AI model different from the target object; and
the performance metric of the first reference signal and the performance metric of another AI model are determined and compared:
if the first performance metric is better than the performance metric of another AI model, performance of the target object is better, and/or if the first performance metric is worse than the performance metric of another AI model, performance of the target object is poor; and/or,
if the first performance metric is better than the performance metric of another AI model, the target object is available, and/or if the first performance metric is worse than the performance metric of another AI model, the target object is unavailable; and/or
if the first performance metric is worse than the performance metric of another AI model, the target object fails; and/or,
if the first performance metric is better than the performance metric of another AI model, it is considered that the target object (such as an AI model) is better than the other AI model, and/or the target object is worse than the other AI model.

It is assumed that another AI model is a fourth AI model. For ease of description, the performance metric of the fourth AI model is represented as Q4.

Some examples include the following.

Taking the performance metric (first performance metric and fourth performance metric) being RSRP/SINR/throughput/hypothesis throughput as an example: Q1 is the RSRP/SINR/throughput/hypothesis throughput corresponding to the first reference signal, and Q4 is the RSRP/SINR/throughput/hypothesis throughput corresponding to the fourth AI model. If Q1>=Q4, it indicates that performance of the AI-based CSI feedback method is better; if Q1 < Q4, it indicates that performance of AI-based CSI feedback method is poor, or indicates that the AI-based CSI feedback method fails.

Taking the performance metric being hypothesis BLER as an example: Q1 is the hypothesis BLER corresponding to the channel state information corresponding to the first reference signal, and Q4 is the hypothesis BLER corresponding to the fourth AI model. If Q1<=Q4, it indicates that performance of the AI-based CSI feedback method is better; if Q1> Q4, it indicates that performance of AI-based CSI feedback method is poor, or indicates that the AI-based CSI feedback method fails.

Taking performance metric being SGCS/GCS/NMSE/MSE as an example. Q1 may be the SGCS/CCS/NMSE/MSE calculated based on the CSI obtained from the first reference signal (e.g. channel estimation value) and the CSI obtained from the second reference signal (e.g. effective channel obtained by processing the channel estimation value). Q4 is the SGCS/CCS/NMSE/MSE corresponding to the fourth AI model. If Q1<=Q4, it indicates that performance of the AI-based CSI feedback method is better; if Q1> Q4, it indicates that performance of AI-based CSI feedback method is poor, or indicates that the AI-based CSI feedback method fails.

Taking performance metric being a distribution parameter as an example: Q1 may be the distribution parameter corresponding to the first reference signal (e.g. the distribution parameter corresponding to the channel estimation of the first reference signal), and Q4 is the distribution parameter corresponding to the fourth AI model. For distribution parameters, if Q1<=Q4, it indicates that performance of the AI-based CSI feedback method is better; if Q1> Q4, it indicates that performance of AI-based CSI feedback method is poor, or indicates that the AI-based CSI feedback method fails. For some distribution parameters, if Q1>=Q4, it indicates that performance of the AI-based CSI feedback method is better; if Q1< Q4, it indicates that performance of AI-based CSI feedback method is poor, or indicates that the AI-based CSI feedback method fails.

In an embodiment, Method 4 and Method 3 may be used in combination. For example, beamforming the third reference signal in method 3 corresponds to the CSI determined by the third AI model, which is a combination of method 3 and method 4.

Method 5: the performance of the AI-based CSI feedback method is evaluated based on the comparison between the first performance metric and the performance metric of the second CSI feedback method, with the second CSI feedback method as the reference object; and
a performance metric of the first reference signal and a performance metric of the second CSI feedback method are determined and compared:
if the performance metric of the first CSI feedback method is better than the performance metric of the second CSI feedback method, performance of the target object is better, and/or if the performance metric of the first CSI feedback method is worse than the performance metric of the second CSI feedback method, performance of the target object is poor; and/or,
if the first performance metric is better than the performance metric of the second CSI feedback method, the target object is available, and/or if the first performance metric is worse than the performance metric of the second CSI feedback method, the target object is unavailable;
if the performance metric of the first CSI feedback method is worse than the performance metric of the second CSI feedback method, the target object (based on AI model CSI feedback method) fails; and
if the first performance metric is better than the second CSI feedback method, it is considered that the target object is better than the second CSI feedback method.

For ease of description, the performance metric of the second CSI feedback method is represented as Q5 (fifth performance metric).

Some examples include the following.

Taking the performance metric (first performance metric and fifth performance metric) being RSRP/SINR/throughput/hypothesis throughput as an example: Q5 is the RSRP/SINR/throughput/hypothesis throughput corresponding to the second CSI feedback method. If Q1>=Q5, it indicates that performance of AI-based CSI feedback methods is better/performance of the AI-based CSI feedback method is better than the performance of the second CSI feedback method; if Q1< Q5, it indicates performance of the AI-based CSI feedback methods is poor/performance of AI-based CSI feedback methods is not as good as performance of the second CSI feedback method, or it indicates that AI-based CSI feedback method fails.

Taking the performance metric being hypothesis BLER as an example: Q5 is the hypothesis BLER corresponding to the second CSI feedback method. If Q1<=Q5, it indicates that performance of AI-based CSI feedback method is better/performance of the AI-based CSI feedback method is better than the performance of the second CSI feedback method; if Q1> Q5, it indicates performance of the AI-based CSI feedback methods is poor/performance of AI-based CSI feedback methods is not as good as performance of the second CSI feedback method, or it indicates that AI-based CSI feedback method fails.

Taking performance metric being a distribution parameter as an example: Q5 is the distribution parameter corresponding to the second CSI feedback method. For distribution parameters, if Q1<=Q5, it indicates that performance of AI-based CSI feedback methods is better/performance of the AI-based CSI feedback method is better than the performance of the second CSI feedback method; if Q1> Q5, it indicates performance of the AI-based CSI feedback methods is poor/performance of AI-based CSI feedback methods is not as good as performance of the second CSI feedback method, or it indicates that AI-based CSI feedback method fails. For distribution parameters, if Q1<=Q5, it indicates that performance of AI-based CSI feedback methods is better/performance of the AI-based CSI feedback method is better than the performance of the second CSI feedback method; if Q1> Q5, it indicates performance of the AI-based CSI feedback methods is poor, or it indicates that AI-based CSI feedback method fails/performance of AI-based CSI feedback methods is not as good as performance of the second CSI feedback method.

In an embodiment, Method 5 may also be combined with Method 3. For example, beamforming the third reference signal corresponds to the CSI determined based on another CSI feedback method.

Method 6: the performance of AI-based CSI feedback method is evaluated based on the distribution of channels corresponding to the first reference signal.

At this point, the first reference signal may be multiple.

For example, it is a reference signal for a period of time;
if it deviates from the reference distribution, the performance is poor; otherwise, the performance is better; and/or,
if it deviates from the reference distribution, the model is not useful; otherwise, the model is useful; and/or,
if it deviates from the reference distribution, the model fails.

In this embodiment, a first AI model and the second AI model pair may be regarded as a whole of the AI model, that is, the UE may evaluate the performance of the first AI model and the second AI model pair (a two-sided model composed of the first model and the second model) based on the first reference signal.

### Embodiment II

The base station transmits a second reference signal.

UE receives the second reference signal.

The UE determines the first CSI based on the second reference signal and a codebook.

The UE transmits the first CSI.

The base station receives the first CSI.

The base station transmits a first reference signal based on the first CSI.

The UE receives the first reference signal.

The UE evaluates the performance of codebook-based CSI feedback method based on the first reference signal.

In an embodiment, the base station transmits a first reference signal based on the first CSI, including:
the base station determines the beamforming parameter of the first reference signal based on the first CSI, and transmits the first reference signal based on the beamforming parameter.

The UE evaluates the performance of a codebook-based CSI feedback method based on the first reference signal, which may include:
the UE determines the first performance metric corresponding to the first reference signal, and evaluates performance of the codebook-based CSI feedback method based on the first performance metric.

Examples of the first performance metric include:
RSRP;
RSRQ;
SINR;
hypothesis BLER;
for example: an association relationship between the RSRP of the signal and the BLER corresponding to the PUCCH is established, the RSRP corresponding to the first reference signal is mapped to the BLER corresponding to the PUCCH, and the BLER value is the hypothesis BLER.

Hypothesis throughput:
for example: a throughput is calculated based on the received SINR of the first reference signal, which is the hypothesis throughput. In an embodiment, it may be the throughput calculated through Shannon's formula.

A precision metric:
for example, SGCS, GCS, NMSE, and MSE, etc.; and
the accuracy metrics include: the precision metric determined based on the third CSI corresponding to the first CSI, and the fourth CSI corresponding to the first reference signal determined by the UE.

The fourth CSI corresponding to the first reference signal is the CSI determined by the UE based on the channel corresponding to the first reference signal, and the third CSI is the CSI used to determine the first CSI (e.g., the input CSI of the second AI model).

Distribution metric: the distribution of channels corresponding to the first reference signal, such as distance, etc.

It cannot be ruled out that there may be other metrics.

For ease of description, the first performance metric is represented as Q1.

Methods for UE to evaluate the performance of codebook-based CSI feedback methods based on the first performance metric are as follows.

Method 1: performance of the target object is evaluated based on the comparison between the first performance metric and a threshold, where the target object is a codebook-based CSI feedback method, for example:
if the first performance metric is greater than the threshold, the performance is better, and/or if the first performance metric is less than the threshold, the performance is poor; or, if the first performance metric is less than the threshold, the performance is better, and/or if the first performance metric is greater than the threshold, the performance is poor; and/or,
if the first performance metric is greater than the threshold, it may be used, and/or if the first performance metric is less than the threshold, it is unavailable; or if the first performance metric is less than the threshold, it is available, and/or if the first performance metric is greater than the threshold, it is unavailable.

The first performance metric being RSRP/SINR/throughput/hypothesis throughput is taken as an example. Q1 is the RSRP/SINR/throughput/hypothesis throughput corresponding to the first reference signal. The RSRP of the first reference signal is compared with the first threshold value T1, if Q1>=T1, it indicates that performance of the codebook-based CSI feedback method is better; if Q1< T1, it indicates that performance of the codebook-based CSI feedback method is poor, or it indicates that the codebook-based CSI feedback method fails.

Taking the first performance metric being the hypothesis BLER as an example: Q1 is the hypothesis BLER corresponding to the channel state information corresponding to the first reference signal. If Q1<=T1, it indicates that performance of the codebook-based CSI feedback method is better; if Q1> T1, it indicates that performance of the codebook-based CSI feedback method is poor, or it indicates that the codebook-based CSI feedback method fails.

Taking the first performance metric being SGCS/GCS/NMSE/MSE as an example: Q1 may be the SGCS/GCS/NMSE/MSE calculated based on the CSI obtained from the first reference signal (e.g. channel estimation value) and the CSI obtained from the second reference signal (e.g. effective channel obtained by processing the channel estimation value). If Q1<=T1, it indicates that performance of the codebook-based CSI feedback method is better; if Q1> T1, it indicates that performance of the codebook-based CSI feedback method is poor, or it indicates that the codebook-based CSI feedback method fails.

Taking the first performance metric being the distribution parameter as an example: Q1 may be the distribution parameter corresponding to the first reference signal (e.g. the distribution parameter corresponding to the channel estimation of the first reference signal). For distribution parameters, if Q1<=T1, it indicates that performance of the codebook-based CSI feedback method is better; if Q1> T1, it indicates that performance of the codebook-based CSI feedback method is poor, or it indicates that the codebook-based CSI feedback method fails. For distribution parameters, if Q1>=T1, it indicates that performance of the codebook-based CSI feedback method is better; if Q1<T1, it indicates that performance of the codebook-based CSI feedback method is poor, or it indicates that the codebook-based CSI feedback method fails.

Method 2: performance of the target object is evaluated based on the comparison between the first performance metric and the second performance metric corresponding to the second reference signal, where the target object is a codebook-based CSI feedback method (The behavior on the base station side involves transmitting a second reference signal to the UE, which may be done before or after any current step on the base station side).

For ease of description, the second performance metric is represented as Q2.

In an embodiment, the second performance metric is of the same type as the first performance metric.

In an embodiment, the second reference signal is a reference signal used to determine the second CSI.

The second performance metric may be determined in the following ways:
determining the channel estimation value based on the second reference signal, determining third CSI based on the channel estimation value, and determining the second performance metric based on the third CSI; and
determining a performance metric based on an effective channel obtained by pre-coding the channel estimation value corresponding to the second reference signal using the third CSI.

Taking the performance metric (first performance metric and second performance metric) as RSRP/SINR/throughput/hypothesis throughput as an example. Q1 is the RSRP/SINR/throughput/hypothesis throughput corresponding to the first reference signal, and Q2 is the RSRP/SINR/throughput/hypothesis throughput corresponding to the second reference signal. If Q1>=Q2, it indicates that performance of the codebook-based CSI feedback method is better; if Q1< Q2, it indicates that performance of the codebook-based CSI feedback method is poor, or it indicates that the codebook-based CSI feedback method fails.

Taking the performance metric being hypothesis BLER as an example: Q1 is the hypothesis BLER corresponding to the channel state information corresponding to the first reference signal, and Q2 is the hypothesis BLER corresponding to the channel state information corresponding to the second reference signal. If Q1<=Q2, it indicates that performance of the codebook-based CSI feedback method is better; if Q1> Q2, it indicates that performance of the codebook-based CSI feedback method is poor, or it indicates that the codebook-based CSI feedback method fails.

Taking performance metric being a distribution parameter as an example: Q1 may be the distribution parameter corresponding to the first reference signal (e.g. the distribution parameter corresponding to the channel estimation of the first reference signal), Q2 may be the distribution parameter based on the second reference signal. For distribution parameters, if Q1<=Q2, it indicates that performance of the codebook-based CSI feedback method is better; if Q1> Q2, it indicates that performance of the codebook-based CSI feedback method is poor, or it indicates that the codebook-based CSI feedback method fails. For distribution parameters, if Q1>=Q2, it indicates that performance of the codebook-based CSI feedback method is better; if Q1< Q2, it indicates that performance of the codebook-based CSI feedback method is poor, or it indicates that the codebook-based CSI feedback method fails.

Method 3: performance of the target object is evaluated based on the comparison between the first performance metric and the third performance metric corresponding to the third reference signal, where the target object is a codebook-based CSI feedback method.

In an embodiment, beamforming the third reference signal corresponds to the CSI determined by the third AI model.

That is, the third reference signal is the beamformed reference signal corresponding to the third AI model.

In an embodiment, beamforming the third reference signal corresponds to CSI determined based on another CSI feedback method.

For example, the third reference signal is the beamformed reference signal corresponding to the codebook-based CSI feedback method; that is, beamforming the third reference signal is determined based on the fifth CSI, which is the CSI fed back under the codebook-based CSI feedback method.

For ease of description, the third performance metric is represented as Q3.

Some examples include the following.

Taking the performance metric (first performance metric and third performance metric) being RSRP/SINR/throughput/hypothesis throughput as an example: Q1 is the RSRP/SINR/throughput/hypothesis throughput corresponding to the first reference signal, and Q3 is the RSRP/SINR/throughput/hypothesis throughput corresponding to the third reference signal. If Q1>=Q3, it indicates that performance of the codebook-based CSI feedback method is better; if Q1< Q3, it indicates that performance of the codebook-based CSI feedback method is poor, or it indicates that the codebook-based CSI feedback method fails.

Taking the performance metric being hypothesis BLER as an example: Q1 is the hypothesis BLER corresponding to the channel state information corresponding to the first reference signal, and Q3 is the hypothesis BLER corresponding to the channel state information corresponding to the third reference signal. If Q1<=Q3, it indicates that performance of the codebook-based CSI feedback method is better; if Q1> Q3, it indicates that performance of the codebook-based CSI feedback method is poor, or it indicates that the codebook-based CSI feedback method fails.

Taking performance metric being SGCS/GCS/NMSE/MSE as an example. Q1 may be the SGCS/GCS/NMSE/MSE calculated based on the CSI obtained from the first reference signal (e.g. channel estimation value) and the CSI obtained from the third reference signal (e.g. effective channel obtained by processing the channel estimation value). Q3 is the SGCS/GCS/NMSE/MSE calculated based on the CSI obtained from the third reference signal (e.g. channel estimation value) and the CSI obtained from the third reference signal (e.g. effective channel obtained by processing the channel estimation value). If Q1<=Q3, it indicates that performance of the codebook-based CSI feedback method is better; if Q1> Q3, it indicates that performance of the codebook-based CSI feedback method is poor, or it indicates that the codebook-based CSI feedback method fails.

Taking performance metric being a distribution parameter as an example: Q1 may be the distribution parameter corresponding to the first reference signal (e.g. the distribution parameter corresponding to the channel estimation of the first reference signal), and Q3 is the distribution parameter corresponding to the third reference signal. For distribution parameters, if Q1<=Q3, it indicates that performance of the codebook-based CSI feedback method is better; if Q1> Q3, it indicates that performance of the codebook-based CSI feedback method is poor, or it indicates that the codebook-based CSI feedback method fails. For distribution parameters, if Q1>=Q3, it indicates that performance of the codebook-based CSI feedback method is better; if Q1< Q3, it indicates that performance of the codebook-based CSI feedback method is poor, or it indicates that the codebook-based CSI feedback method fails.

Method 4: performance of the codebook-based CSI feedback method is evaluated based on the comparison between the performance metric of the first performance metric and the fourth AI model; and
a performance metric of the first reference signal and a performance metric of the fourth AI model are determined and compared:
if the first performance metric is better than the performance metric of the fourth AI model, performance of the target object is better, and/or if the first performance metric is worse than the performance metric of the fourth AI model, performance of the target object is poor; and/or,
if the first performance metric is better than the performance metric of the fourth AI model, the target object is available, and/or if the first performance metric is worse than the performance metric of the fourth AI model, the target object is unavailable; and/or
if the first performance metric is worse than the performance metric of the fourth AI model, the target object fails; and/or,
if the first performance metric is better than the fourth AI model, it is considered that the target object is better than the fourth AI model, and/or the target object is worse than the fourth AI model.

For ease of description, the performance metric of the fourth AI model is represented as Q4 (fourth performance metric).

Some examples include the following.

Taking the performance metric (first performance metric and fourth performance metric) being RSRP/SINR/throughput/hypothesis throughput as an example: Q1 is the RSRP/SINR/throughput/hypothesis throughput corresponding to the first reference signal, and Q4 is the RSRP/SINR/throughput/hypothesis throughput corresponding to the fourth AI model. If Q1>=Q4, it indicates that performance of the codebook-based CSI feedback method is better; if Q1< Q4, it indicates that performance of the codebook-based CSI feedback method is poor, or it indicates that the codebook-based CSI feedback method fails.

Taking the performance metric being hypothesis BLER as an example: Q1 is the hypothesis BLER corresponding to the channel state information corresponding to the first reference signal, and Q4 is the hypothesis BLER corresponding to the fourth AI model. If Q1<=Q4, it indicates that performance of the codebook-based CSI feedback method is better; if Q1> Q4, it indicates that performance of the codebook-based CSI feedback method is poor, or it indicates that the codebook-based CSI feedback method fails.

Taking performance metric being SGCS/GCS/NMSE/MSE as an example. Q1 may be the SGCS/CCS/NMSE/MSE calculated based on the CSI obtained from the first reference signal (e.g. channel estimation value) and the CSI obtained from the second reference signal (e.g. effective channel obtained by processing the channel estimation value). Q4 is the SGCS/CCS/NMSE/MSE corresponding to the fourth AI model. If Q1<=Q4, it indicates that performance of the codebook-based CSI feedback method is better; if Q1> Q4, it indicates that performance of the codebook-based CSI feedback method is poor, or it indicates that the codebook-based CSI feedback method fails.

Taking performance metric being a distribution parameter as an example: Q1 may be the distribution parameter corresponding to the first reference signal (e.g. the distribution parameter corresponding to the channel estimation of the first reference signal), and Q4 is the distribution parameter corresponding to the fourth AI model. For distribution parameters, if Q1<=Q4, it indicates that performance of the codebook-based CSI feedback method is better; if Q1> Q4, it indicates that performance of the codebook-based CSI feedback method is poor, or it indicates that the codebook-based CSI feedback method fails. For distribution parameters, if Q1>=Q4, it indicates that performance of the codebook-based CSI feedback method is better; if Q1 < Q4, it indicates that performance of the codebook-based CSI feedback method is poor, or it indicates that the codebook-based CSI feedback method fails.

Method 4 and Method 3 may be used in combination. For example, beamforming the third reference signal in method 3 corresponds to the CSI determined by the third AI model, which is a combination of method 3 and method 4.

Method 5: performance of the codebook-based CSI feedback method is evaluated based on the comparison between the performance metric of the first performance metric and the second CSI feedback method; and
a first performance metric of the first reference signal and a first performance metric of a fifth performance metric of the second CSI feedback method are determined and compared:
if the first performance metric is better than the performance metric of the second CSI feedback method, performance is better; and/or if the performance metric is worse than the performance metric of the second CSI feedback method, performance is poor; and/or,
if the first performance metric is better than the performance metric of the second CSI feedback method, the target object is available, and/or if the first performance metric is worse than the performance metric of the second CSI feedback method, the target object is unavailable;
if the first performance metric is worse than the performance metric of the second CSI feedback method, the target object fails; and
if the first performance metric is better than the second CSI feedback method, it is considered that the target object is better than the second CSI feedback method.

For ease of description, the performance metric of the second CSI feedback method is represented as Q5 (fifth performance metric).

Some examples include the following.

Taking the performance metric (first performance metric and fifth performance metric) being RSRP/SINR/throughput/hypothesis throughput as an example: Q5 is the RSRP/SINR/throughput/hypothesis throughput corresponding to the second CSI feedback method. If Q1>=Q5, it indicates that performance of the codebook-based CSI feedback method is better/performance of the codebook-based CSI feedback method is better than performance of the second CSI feedback method; if Q1< Q5, it indicates that performance of the codebook-based CSI feedback method is poor/performance of the codebook-based CSI feedback method is not as good as performance of the second CSI feedback method, or it indicates that the codebook-based CSI feedback method fails.

Taking the performance metric being hypothesis BLER as an example: Q5 is the hypothesis BLER corresponding to the second CSI feedback method. If Q1<=Q5, it indicates that performance of the codebook-based CSI feedback method is better/performance of the codebook-based CSI feedback method is better than the performance of the second CSI feedback method; if Q1> Q5, it indicates that performance of the codebook-based CSI feedback method is poor/performance of the codebook-based CSI feedback method is not as good as performance of the second CSI feedback method, or it indicates that the codebook-based CSI feedback method fails.

Taking performance metric being a distribution parameter as an example: Q5 is the distribution parameter corresponding to the second CSI feedback method. For distribution parameters. If Q1<=Q5, it indicates that performance of the codebook-based CSI feedback method is better/performance of the codebook-based CSI feedback method is better than performance of the second CSI feedback method; if Q1> Q5, it indicates that performance of the codebook-based CSI feedback method is poor/performance of the codebook-based CSI feedback method is not as good as performance of the second CSI feedback method, or it indicates that the codebook-based CSI feedback method fails. For distribution parameters, if Q1>=Q5, it indicates that performance of the codebook-based CSI feedback method is better/performance of the codebook-based CSI feedback method is better than performance of the second CSI feedback method; if Q1< Q5, it indicates that performance of the codebook-based CSI feedback method is poor, or it indicate that the codebook-based CSI feedback method fails/performance of the codebook-based CSI feedback method is not as good as performance of the second CSI feedback method.

Method 5 may also be combined with Method 3. For example, beamforming the third reference signal corresponds to the CSI determined based on another CSI feedback method.

Embodiment 3: method for indicating the correspondence between the first reference signal and the CSI corresponding to the target object

Way 1: the base station indicates the correspondence between the first reference signal and the CSI corresponding to the target object to the UE. The UE determines, based on the indication, the correspondence between the CSI corresponding to the target object and the first reference signal (in an embodiment, further determines that the first reference signal is used to evaluate the performance of which CSI feedback algorithm/Al model or AI models(evaluating the performance of the CSI feedback algorithm/Al model corresponding to the CSI corresponding to the target object)).

Way 1-1: the base station configures one or more pieces of the following information to correspond to the CSI corresponding to the target object in the first indication information:
identification information (e.g. ID) of the first reference signal and/or a transmission occasion corresponding to the first reference signal;
identification information (e.g. ID) of the first reference signal resource set and/or a transmission occasion corresponding to the first reference signal; or
first reference signal resource configuration and/or a transmission occasion corresponding to the first reference signal;
the CSI corresponding to the target object of the first reference signal includes: CSI corresponding to the above information.

For example, the first reference signal corresponds to the CSI corresponding to the identity of the first reference signal (e.g., the CSI corresponding to the target object is determined based on the reference signal corresponding to the identity of the reference signal).

In an embodiment, the first reference signal corresponds to the CSI that satisfies the first condition and corresponds to the above information. For example, before transmitting the first reference signal, the CSI corresponding to the most recent M-th reference signal/reference signal resource set indicated by the base station to the UE (where M is greater than or equal to 1). For example, the first condition is a time condition, which means that a time requirement is satisfied between the CSI corresponding to the target object corresponding to the first reference signal and the first reference signal.

Way 1-2: the base station indicates the correspondence between the first reference signal and the CSI report configuration information and/or the time-domain resource information and/or frequency-domain resource information of the CSI report to the UE. The CSI corresponding to the target object corresponding to the first reference signal includes: the CSI corresponding to the target object corresponding to the CSI report configuration information and/or the time-domain and/or frequency-domain resource information corresponding to the CSI report.

For example, the CSI report configuration corresponding to the first reference signal and/or its corresponding transmission occasion is indicated.

In an embodiment, the first reference signal corresponds to the CSI that satisfies the first condition and corresponds to the above information. For example, before transmitting the first reference signal, the information indicated by the base station to the UE corresponds to the most recent M-th CSI report (where M is greater than or equal to 1). For example, the first condition is a time condition, which means that a time requirement is satisfied between the CSI corresponding to the first reference signal and the first reference signal.

For the way in which the base station indicates the CSI report configuration information and/or transmission occasion corresponding to the first reference signal, in an embodiment, the base station indicates that a rank of the CSI corresponding to the target object before transmitting the first reference signal.

Way 1-3: the base station indicates the ID of the AI model corresponding to the first reference signal to the UE:
the CSI corresponding to the first reference signal is the CSI with the same AI model ID.

Way 1-4: the base station indicates the timing offset of the transmission occasion of the CSI corresponding to the target object and the transmission occasion of the first reference signal to the UE.

Way 2: UE indicates to the base station the second indication information of the first reference signal corresponding to the CSI corresponding to the target object. The base station may determine at least one of the following based on the indication:
a correspondence between the first reference signal and the CSI corresponding to the target object; or
a time domain and/or frequency domain resource of the first reference signal corresponding to the transmission target object.

Way 2-1: the UE indicates ID information corresponding to the CSI corresponding to the target object, and the base station indicates the ID information corresponding to the first reference signal in case of transmitting the first reference signal. CSI corresponding to the same ID corresponds to the first reference signal.

Some examples of the ID information include: the resource ID of the first reference signal and the resource set ID of the first reference signal.

Way 2-2: the UE indicates the resource information (time-domain and/or frequency-domain resource, signal resource, channel resource, etc.) of the first reference signal corresponding to the CSI corresponding to the target object.

In an embodiment, the base station configures multiple time-domain and/or frequency-domain resource information for the first reference signal. When indicating the time-domain and/or frequency-domain resource of the first reference signal corresponding to the CSI corresponding to the target object, the UE selects one or more pieces of the multiple time-domain and/or frequency-domain resource information.

Way 2-3: the UE indicates the AI model associated information (model ID, etc.) corresponding to the first reference signal corresponding to the CSI corresponding to the target object.

In an embodiment, the above indication information and the CSI corresponding to the target object are transmitted together.

In an embodiment, the above indication information is not transmitted together with the CSI corresponding to the target object, but the CSI corresponding to the target object has an agreed (e.g. protocol agreement) association relationship (e.g. agreed time domain relationship) with the above information.

Way 3: the association relationship between the agreed first reference signal and the CSI corresponding to the target object.

Way 3-1: the beamformed reference signal at a given time interval between the CSI corresponding to the target object is the first reference signal corresponding to the CSI corresponding to the target object.

In an embodiment, the above examples are provided for the convenience of understanding the present application and should not constitute any limitation to the present application.

In the related art, although there is also the concept of beamformed CSI-RS, beamformed CSI-RS is used to determine the optimal downlink transmission beam and is not used to evaluate the performance of CSI feedback algorithms. In addition, in the related art, how to determine the beamforming parameters of beamformed CSI-RS is determined by the base station itself, without the need to establish an association relationship with CSI feedback/other reference signals, nor does it require the base station and terminal to reach a consensus on its association relationship with CSI feedback/other reference signals.

In the method for performance evaluation provided in embodiments of the present application, CSI is used to beamform the first reference signal, and the first reference signal is transmitted to the UE to reflect CSI through the beamformed reference signal (first reference signal). By transmitting the first reference signal beamformed using CSI to the UE in this way, CSI transmission may be achieved with lower overhead. In addition, there is only one solution in the related art that calculates the intermediate KPI based on the recovered CSI compared to the target CSI, and evaluates the performance of AI models based on the intermediate KPI. The present application provides more solutions for evaluating the performance of CSI feedback methods and/or AI models based on first reference signals carrying CSI information. This method may also be extended to evaluate the performance of non-AI CSI feedback methods.

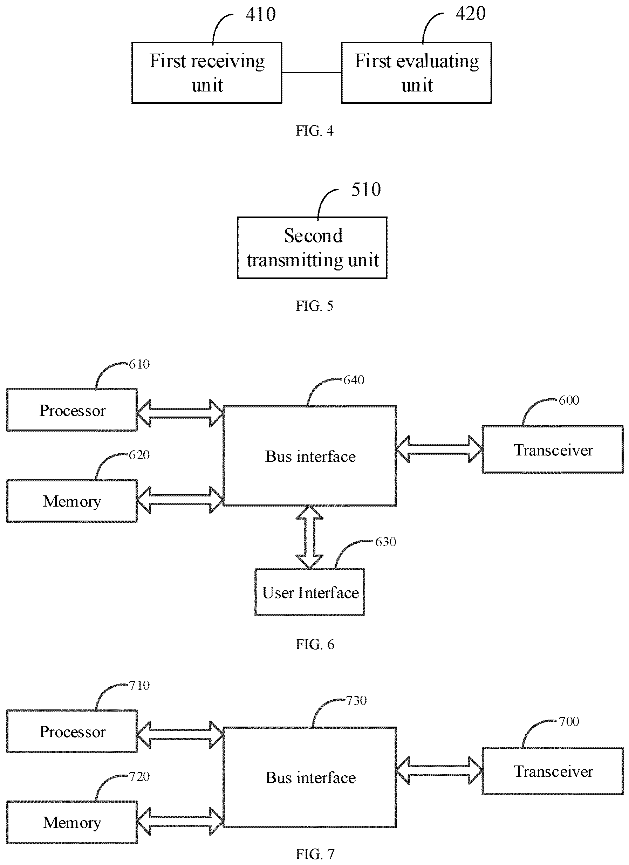

Referring to FIG. 4, FIG. 4 is a first schematic structural diagram of an apparatus for performance evaluation according to an embodiment of the present application. As shown in FIG. 4, embodiments of the present application provide an apparatus for performance evaluation that may be used in a terminal device. The apparatus includes:
a first receiving unit 410, used for receiving a first reference signal transmitted from a network device, where a transmission parameter of the first reference signal is determined by the network device based on channel state information (CSI), and the CSI is determined based on a target object and/or the CSI is transmitted based on a target object; and
a first evaluating unit 420, used for evaluating performance of the target object based on the received first reference signal.

In an embodiment, the transmission parameter includes at least one of:
a transmission position;
a beamforming parameter; or
resource configuration.

In an embodiment, the target object includes any one or a combination of:
a method for determining CSI;
a method for transmitting CSI; or
a model for determining CSI.

In an embodiment, there is a correspondence between the first reference signal and the target object.

In an embodiment, the first evaluating unit 420 is used for evaluating performance of the target object based on the received first reference signal; and
the first evaluating unit 420 is used for evaluating performance of the target object based on the received first reference signal and the correspondence.

In an embodiment, the apparatus further includes one or more of:
a first receiving unit 410, used for receiving first indication information transmitted from the network device to indicate the correspondence;
a first transmitting unit, used for transmitting second indication information to the network device to indicate the correspondence; or
a first determining unit, used for determining the correspondence based on a pre-agreement with the network device.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, the first evaluating unit 420 is used for evaluating the performance of the target object based on the first reference signal, including:
the first evaluating unit 420, used for determining a first performance metric corresponding to the first reference signal based on the first reference signal; and
the first evaluating unit 420, used for evaluating the performance of the target object based on the first performance metric.

In an embodiment, the first performance metric includes at least one of:
reference signal received power (RSRP);
reference signal received quality (RSRQ);
a signal-to-interference-plus-noise ratio (SINR);
a system performance metric;
a precision metric; or
a distribution metric.

In an embodiment, the first evaluating unit 420 used for evaluating the performance of the target object based on the first performance metric, includes any one or a combination of:
the first evaluating unit 420, used for evaluating the performance of the target object based on the first performance metric and a first value range;
the first evaluating unit 420, used for evaluating the performance of the target object based on the first performance metric and a performance metric corresponding to a reference object; or
the first evaluating unit 420, used for evaluating the performance of the target object based on the first performance metric and one or more performance metrics corresponding to a reference signal, where a number of the reference signal is one or more.

In an embodiment, the first receiving unit 410 is also used for receiving a second reference signal transmitted from the network device; and
the apparatus further includes a first CSI determining unit, used for determining first CSI based on the second reference signal; and
the first transmitting unit is further used for transmitting the first CSI to the network device, where the first CSI is used for determining, by the network device, the transmission parameter of the first reference signal.

In an embodiment, the first CSI determination used for determining first CSI based on the second reference signal includes:
the first CSI determining unit, used for determining the first CSI based on a codebook and the second reference signal; or
the first CSI determining unit, used for determining the first CSI based on a first model and the second reference signal;
where, in case of determining the first CSI based on the first model and the second reference signal, the first CSI is used for determining, by the network device, second CSI based on a second model corresponding to the first model, and the second CSI is used for determining, by the network device, the transmission parameter of the first reference signal.

In an embodiment, the target object includes any one or a combination of:
the first model;
the second model;
a two-sided model composed of the first model and the second model; or
a method of determining the first CSI based on a codebook.

In an embodiment, the first transmitting unit is further used for transmitting an evaluation result to the network device.

The methods and apparatuses provided in each embodiment of the present application are based on the same application concept. As the method for performance evaluation performed by terminal device and the apparatus for performance evaluation for use in terminal device have similar principles for solving problems and may achieve the same technical effects, the implementation of the apparatus and method may be mutually referenced, and the repetition is not repeated.

Referring to FIG. 5, FIG. 5 is a second schematic structural diagram of an apparatus for performance evaluation according to an embodiment of the present application. As shown in FIG. 5, embodiments of the present application provide an apparatus for performance evaluation that may be used in a network device. The apparatus includes:
a second transmitting unit 510 is used for transmitting a first reference signal to a terminal device, where a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

In an embodiment, the transmission parameter includes at least one of:
a transmission position;
a beamforming parameter; or
resource configuration.

In an embodiment, the target object includes any one or a combination of:
a method for determining CSI;
a method for transmitting CSI; or
a model for determining CSI.

In an embodiment, there is a correspondence between the first reference signal and the target object.

In an embodiment, the apparatus further includes any one or a combination of:
the second transmitting unit 510, further used for transmitting first indication information to the terminal device to indicate the correspondence;
a second receiving unit, used for receiving second indication information transmitted from the terminal device to indicate the correspondence; or
a second determining unit, used for determining the correspondence based on a pre-agreement with the terminal device.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, the second transmitting unit 510 is further used for transmitting a second reference signal to the terminal device;
the second receiving unit is further used for receiving first CSI determined based on the second reference signal transmitted from the terminal device; and
the apparatus further includes a parameter determining unit, used for determining the transmission parameter of the first reference signal based on the first CSI.

In an embodiment, the parameter determining unit for determining the transmission parameter of the first reference signal based on the first CSI includes:
the parameter determining unit, used for determining the transmission parameter of the first reference signal based on a codebook and the first CSI; or
the parameter determining unit, used for determining second CSI based on a second model and the first CSI, and determining the transmission parameter of the first reference signal based on the second CSI.

In an embodiment, the target object includes any one or a combination of:
a first model, where the first model is a model corresponding to the second model and used for the terminal device to determine the first CSI;
the second model;
a two-sided model composed of the first model and the second model; or
a method of determining the first CSI based on a codebook.

In an embodiment, the second receiving unit is further used for receiving an evaluation result transmitted from the terminal device.

The methods and apparatuses provided in each embodiment of the present application are based on the same application concept. As the method for performance evaluation performed by network device and the apparatus for performance evaluation for use in network device have similar principles for solving problems and may achieve the same technical effects, the implementation of the apparatus and method may be mutually referenced, and the repetition is not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

FIG. 6 is a schematic structural diagram of a terminal device according to an embodiment of the present application. As shown in FIG. 6, the terminal includes a memory 620, a transceiver 600, and a processor 610; the processor 610 and the memory 620 may also be physically arranged separately.

The memory 620 is used for storing a computer program; the transceiver 600 is used for transmitting and receiving data under control of the processor 610; the processor 610 is used for calling the computer program stored in the memory 620 to perform any one of the methods for performance evaluation performed by the terminal device provided in the present application according to the obtained executable instructions, such as:
receiving a first reference signal transmitted from a network device, where a transmission parameter of the first reference signal is determined by the network device based on channel state information (CSI), and the CSI is determined based on a target object and/or the CSI is transmitted based on a target object; and
evaluating performance of the target object based on the received first reference signal.

In an embodiment, the transceiver 600 is used for receiving and transmitting data under control of the processor 610.

In FIG. 6, bus interface 640 may include any number of interconnected buses and bridges, one or more processors represented by the processor 610 and various circuits of memory represented by the memory 620 connected together. The bus interface 640 may also connect various other circuits such as peripheral devices, voltage regulators, and power management circuits together, which are well known in this field, and therefore will not be further described in the present application. The bus interface provides an interface. The transceiver 600 may include multiple elements, i.e., include a transmitter and a receiver, units for providing communication with various other devices over transmission media including wireless channels, wired channels, fiber optic cables, and the like. For different terminals, it may also include a user interface 630, which may be an interface capable of externally or internally connecting the required device, and the connected device includes, but not limited to, a keypad, a display, a speaker, a microphone, a joystick, and the like.

The processor 610 is responsible for managing the bus architecture and general processing, and the memory 620 may store data used by the processor 610 when performing operations.

In an embodiment, processor 610 may be a central processing unit (CPU), an application specific integrated circuit (ASIC), a field-programmable gate array (FPGA), or a complex programmable logic device (CPLD). The processor may also use a multi-core architecture.

In an embodiment, the transmission parameter includes at least one of:
a transmission position;
a beamforming parameter; or
resource configuration.

In an embodiment, the target object includes any one or a combination of:
a method for determining CSI;
a method for transmitting CSI; or
a model for determining CSI.

In an embodiment, there is a correspondence between the first reference signal and the target object.

In an embodiment, evaluating performance of the target object based on the received first reference signal includes:
evaluating performance of the target object based on the received first reference signal and the correspondence.

In an embodiment, the operations further include one or more of:
receiving first indication information transmitted from the network device to indicate the correspondence;
transmitting second indication information to the network device to indicate the correspondence; or
determining the correspondence based on a pre-agreement with the network device.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, evaluating the performance of the target object based on the first reference signal includes:
determining a first performance metric corresponding to the first reference signal based on the first reference signal; and
evaluating the performance of the target object based on the first performance metric.

In an embodiment, the first performance metric includes at least one of:
reference signal received power (RSRP);
reference signal received quality (RSRQ);
a signal-to-interference-plus-noise ratio (SINR);
a system performance metric;
a precision metric; or
a distribution metric.

In an embodiment, evaluating the performance of the target object based on the first performance metric includes any one or a combination of:
evaluating the performance of the target object based on the first performance metric and a first value range;
evaluating the performance of the target object based on the first performance metric and a performance metric corresponding to a reference object; or
evaluating the performance of the target object based on the first performance metric and one or more performance metrics corresponding to a reference signal, where a number of the reference signal is one or more.

In an embodiment, before receiving the first reference signal transmitted from the network device, the method further includes:
receiving a second reference signal transmitted from the network device;
determining first CSI based on the second reference signal; and
transmitting the first CSI to the network device, where the first CSI is used for determining, by the network device, the transmission parameter of the first reference signal.

In an embodiment, determining the first CSI based on the second reference signal includes:
determining the first CSI based on a codebook and the second reference signal; or
determining the first CSI based on a first model and the second reference signal;
where, in case of determining the first CSI based on the first model and the second reference signal, the first CSI is used for determining, by the network device, second CSI based on a second model corresponding to the first model, and the second CSI is used for determining, by the network device, the transmission parameter of the first reference signal.

In an embodiment, the target object includes any one or a combination of:
the first model;
the second model;
a two-sided model composed of the first model and the second model; or
a method of determining the first CSI based on a codebook.

In an embodiment, the operations further include:
transmitting an evaluation result to the network device.

It should be noted that the terminal device provided in embodiments of the present application may implement all the method steps of the method for performance evaluation performed by the terminal device described above, and may achieve the same technical effects. Therefore, the same parts and beneficial effects as the method embodiments in this embodiment will not be described here.

FIG. 7 is a schematic structural diagram of a network device according to an embodiment of the present application. As shown in FIG. 7, the network device includes a memory 720, a transceiver 700, and a processor 710, where
the memory 720 is used for storing a computer program, the transceiver 700 is used for receiving and transmitting data under control of the processor 710, and the processor 710 is used for reading the computer program in the memory 720 and performing the following operations:
transmitting a first reference signal to a terminal device, where a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

In an embodiment, the transceiver 700 is used for receiving and transmitting data under control of the processor 710.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, which are well known in the art, and therefore will not be further described in the present application. The bus interface provides an interface. The transceiver 700 may include multiple elements, i.e., include a transmitter and a receiver, units for providing communication with various other devices over transmission media including wireless channels, wired channels, fiber optic cables, and the like. The processor 710 is responsible for managing the bus architecture and general processing, and the memory 720 may store data used by the processor 710 when performing operations.

The processor 710 may be a central processing unit (CPU), an application specific integrated circuit (ASIC), a field-programmable gate array (FPGA), or a complex programmable logic device (CPLD). The processor may also use a multi-core architecture.

In an embodiment, the transmission parameter includes at least one of:
a transmission position;
a beamforming parameter; or
resource configuration.

In an embodiment, the target object includes any one or a combination of:
a method for determining CSI;
a method for transmitting CSI; or
a model for determining CSI.

In an embodiment, there is a correspondence between the first reference signal and the target object.

In an embodiment, the operations further include one or more of:
transmitting first indication information to the terminal device to indicate the correspondence;
receiving second indication information transmitted from the terminal device to indicate the correspondence; or
determining the correspondence based on a pre-agreement with the terminal device.

In an embodiment, the correspondence includes one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

In an embodiment, the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

In an embodiment, before transmitting the first reference signal to the terminal device, the method further includes:
transmitting a second reference signal to the terminal device;
receiving first CSI determined based on the second reference signal transmitted from the terminal device; and
determining the transmission parameter of the first reference signal based on the first CSI.

In an embodiment, determining the transmission parameter of the first reference signal based on the first CSI includes:
determining the transmission parameter of the first reference signal based on a codebook and the first CSI; or
determining second CSI based on a second model and the first CSI, and determining the transmission parameter of the first reference signal based on the second CSI.

In an embodiment, the target object includes any one or a combination of:
a first model, where the first model is a model corresponding to the second model and used for the terminal device to determine the first CSI;
the second model;
a two-sided model composed of the first model and the second model; or
a method of determining the first CSI based on a codebook.

In an embodiment, the operations further include:
receiving an evaluation result transmitted from the terminal device.

It should be noted that the network device provided in embodiments of the present application may implement all the method steps of the method for performance evaluation performed by network device, and may achieve the same technical effects. Therefore, the same parts and beneficial effects as the method embodiments in this embodiment will not be described here.

Embodiments of the present application further provide a processor-readable storage medium, which stores a computer program for causing the processor to perform the method for performance evaluation performed by terminal device provided in the above embodiments, including:
receiving a first reference signal transmitted from a network device, where a transmission parameter of the first reference signal is determined by the network device based on channel state information (CSI), and the CSI is determined based on a target object and/or the CSI is transmitted based on a target object; and
evaluating performance of the target object based on the received first reference signal.

Embodiments of the present application further provide a processor-readable storage medium, which stores a computer program for causing the processor to perform the method for performance evaluation performed by network device provided in the above embodiments, including:
transmitting a first reference signal to a terminal device, where a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage media (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for performance evaluation, performed by a terminal device, comprising:
receiving a first reference signal transmitted from a network device, wherein a transmission parameter of the first reference signal is determined by the network device based on channel state information (CSI), and the CSI is determined based on a target object and/or the CSI is transmitted based on a target object; and
evaluating performance of the target object based on the received first reference signal.

2. The method of claim 1, wherein the transmission parameter comprises at least one of:
a transmission position;
a beamforming parameter; or
resource configuration.

3. The method of claim 1, wherein the target object comprises any one or a combination of:
a method for determining CSI;
a method for transmitting CSI; or
a model for determining CSI.

4. The method of claim 1, wherein there is a correspondence between the first reference signal and the target object.

5. The method of claim 4, wherein evaluating the performance of the target object based on the received first reference signal comprises:
evaluating the performance of the target object based on the received first reference signal and the correspondence.

6. The method of claim 4, wherein the method further comprises one or more of:
receiving first indication information transmitted from the network device to indicate the correspondence;
transmitting second indication information to the network device to indicate the correspondence; or
determining the correspondence based on a pre-agreement with the network device.

7. The method of any one of claims 4 to 6, wherein the correspondence comprises one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

8. The method of claim 6, wherein the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

9. The method of any one of claims 1-6 and 8, wherein evaluating the performance of the target object based on the first reference signal comprises:
determining a first performance metric corresponding to the first reference signal based on the first reference signal; and
evaluating the performance of the target object based on the first performance metric.

10. The method of claim 9, wherein the first performance metric comprises at least one of:
reference signal received power (RSRP);
reference signal received quality (RSRQ);
a signal-to-interference-plus-noise ratio (SINR);
a system performance metric;
a precision metric; or
a distribution metric.

11. The method of claim 9, wherein evaluating the performance of the target object based on the first performance metric comprises any one or a combination of:
evaluating the performance of the target object based on the first performance metric and a first value range;
evaluating the performance of the target object based on the first performance metric and a performance metric corresponding to a reference object; or
evaluating the performance of the target object based on the first performance metric and one or more performance metrics corresponding to a reference signal, wherein a number of the reference signal is one or more.

12. The method of any one of claims 1-6 and 8, wherein before receiving the first reference signal transmitted from the network device, the method further comprises:
receiving a second reference signal transmitted from the network device;
determining first CSI based on the second reference signal; and
transmitting the first CSI to the network device, wherein the first CSI is used for determining, by the network device, the transmission parameter of the first reference signal.

13. The method of claim 12, wherein determining the first CSI based on the second reference signal comprises:
determining the first CSI based on a codebook and the second reference signal; or
determining the first CSI based on a first model and the second reference signal;
wherein, in case of determining the first CSI based on the first model and the second reference signal, the first CSI is used for determining, by the network device, second CSI based on a second model corresponding to the first model, and the second CSI is used for determining, by the network device, the transmission parameter of the first reference signal.

14. The method of claim 13, wherein the target object comprises any one or a combination of:
the first model;
the second model;
a two-sided model composed of the first model and the second model; or
a method of determining the first CSI based on a codebook.

15. The method of any one of claims 1-6 and 8, further comprising:
transmitting an evaluation result to the network device.

16. A method for performance evaluation, performed by a network device, comprising:
transmitting a first reference signal to a terminal device, wherein a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

17. The method of claim 16, wherein the transmission parameter comprises at least one of:
a transmission position;
a beamforming parameter; or
resource configuration.

18. The method of claim 16, wherein the target object comprises any one or a combination of:
a method for determining CSI;
a method for transmitting CSI; or
a model for determining CSI.

19. The method of claim 16, wherein there is a correspondence between the first reference signal and the target object.

20. The method of claim 19, wherein the method further comprises one or more of:
transmitting first indication information to the terminal device to indicate the correspondence;
receiving second indication information transmitted from the terminal device to indicate the correspondence; or
determining the correspondence based on a pre-agreement with the terminal device.

21. The method of claim 19 or 20, wherein the correspondence comprises one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

22. The method of claim 20, wherein the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

23. The method of any one of claims 16-20 and 22, wherein before transmitting the first reference signal to the terminal device, the method further comprises:
transmitting a second reference signal to the terminal device;
receiving first CSI determined based on the second reference signal transmitted from the terminal device; and
determining the transmission parameter of the first reference signal based on the first CSI.

24. The method of claim 23, wherein determining the transmission parameter of the first reference signal based on the first CSI comprises:
determining the transmission parameter of the first reference signal based on a codebook and the first CSI; or
determining second CSI based on a second model and the first CSI, and determining the transmission parameter of the first reference signal based on the second CSI.

25. The method of claim 24, wherein the target object comprises any one or a combination of:
a first model, wherein the first model is a model corresponding to the second model and used for the terminal device to determine the first CSI;
the second model;
a two-sided model composed of the first model and the second model; or
a method of determining the first CSI based on a codebook.

26. The method of any one of claims 16-20 and 22, further comprising:
receiving an evaluation result transmitted from the terminal device.

27. A terminal device comprising a memory, a transceiver, and a processor, wherein
the memory is used for storing a computer program; the transceiver is used for transmitting and receiving data under control of the processor; and the processor is used for reading the computer program stored in the memory and performing following operations:
receiving a first reference signal transmitted from a network device, wherein a transmission parameter of the first reference signal is determined by the network device based on channel state information (CSI), and the CSI is determined based on a target object and/or the CSI is transmitted based on a target object; and
evaluating performance of the target object based on the received first reference signal.

28. The terminal device of claim 27, wherein the transmission parameter comprises at least one of:
a transmission position;
a beamforming parameter; or
resource configuration.

29. The terminal device of claim 27, wherein the target object comprises any one or a combination of:
a method for determining CSI;
a method for transmitting CSI; or
a model for determining CSI.

30. The terminal device of claim 27, wherein there is a correspondence between the first reference signal and the target object.

31. The terminal device of claim 30, wherein evaluating the performance of the target object based on the received first reference signal comprises:
evaluating the performance of the target object based on the received first reference signal and the correspondence.

32. The terminal device of claim 30, wherein the operations further comprise one or more of:
receiving first indication information transmitted from the network device to indicate the correspondence;
transmitting second indication information to the network device to indicate the correspondence; or
determining the correspondence based on a pre-agreement with the network device.

33. The terminal device of any one of claims 30 to 32, wherein the correspondence comprises one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

34. The terminal device of claim 32, wherein the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

35. The terminal device of any one of claims 27-32 and 34, wherein evaluating the performance of the target object based on the first reference signal comprises:
determining a first performance metric corresponding to the first reference signal based on the first reference signal; and
evaluating the performance of the target object based on the first performance metric.

36. The terminal device of claim 35, wherein the first performance metric comprises at least one of:
reference signal received power (RSRP);
reference signal received quality (RSRQ);
a signal-to-interference-plus-noise ratio (SINR);
a system performance metric;
a precision metric; or
a distribution metric.

37. The terminal device of claim 35, wherein evaluating the performance of the target object based on the first performance metric comprises any one or a combination of:
evaluating the performance of the target object based on the first performance metric and a first value range;
evaluating the performance of the target object based on the first performance metric and a performance metric corresponding to a reference object; or
evaluating the performance of the target object based on the first performance metric and one or more performance metrics corresponding to a reference signal, wherein a number of the reference signal is one or more.

38. The terminal device of any one of claims 27-32 and 34, wherein before receiving the first reference signal transmitted from the network device, the operations further comprise:
receiving a second reference signal transmitted from the network device;
determining first CSI based on the second reference signal; and
transmitting the first CSI to the network device, wherein the first CSI is used for determining, by the network device, the transmission parameter of the first reference signal.

39. The terminal device of claim 38, wherein determining the first CSI based on the second reference signal comprises:
determining the first CSI based on a codebook and the second reference signal; or
determining the first CSI based on a first model and the second reference signal;
wherein, in case of determining the first CSI based on the first model and the second reference signal, the first CSI is used for determining, by the network device, second CSI based on a second model corresponding to the first model, and the second CSI is used for determining, by the network device, the transmission parameter of the first reference signal.

40. The terminal device of claim 39, wherein the target object comprises any one or a combination of:
the first model;
the second model;
a two-sided model composed of the first model and the second model; or
a method of determining the first CSI based on a codebook.

41. The terminal device of any one of claims 27-32 and 34, wherein the operations further comprise:
transmitting an evaluation result to the network device.

42. A network device, comprising a memory, a transceiver, and a processor, wherein
the memory is used for storing a computer program; the transceiver is used for transmitting and receiving data under control of the processor; and the processor is used for reading the computer program stored in the memory and performing following operations:
transmitting a first reference signal to a terminal device, wherein a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

43. The network device of claim 42, wherein the transmission parameter comprises at least one of:
a transmission position;
a beamforming parameter; or
resource configuration.

44. The network device of claim 42, wherein the target object comprises any one or a combination of:
a method for determining CSI;
a method for transmitting CSI; or
a model for determining CSI.

45. The network device of claim 42, wherein there is a correspondence between the first reference signal and the target object.

46. The network device of claim 45, wherein the operations further comprise one or more of:
transmitting first indication information to the terminal device to indicate the correspondence;
receiving second indication information transmitted from the terminal device to indicate the correspondence; or
determining the correspondence based on a pre-agreement with the terminal device.

47. The network device of claim 45 or 46, wherein the correspondence comprises one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

48. The network device of claim 46, wherein the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

49. The network device of any one of claims 42-46 and 48, wherein before transmitting the first reference signal to the terminal device, the operations further comprise:
transmitting a second reference signal to the terminal device;
receiving first CSI determined based on the second reference signal transmitted from the terminal device; and
determining the transmission parameter of the first reference signal based on the first CSI.

50. The network device of claim 49, wherein determining the transmission parameter of the first reference signal based on the first CSI comprises:
determining the transmission parameter of the first reference signal based on a codebook and the first CSI; or
determining second CSI based on a second model and the first CSI, and determining the transmission parameter of the first reference signal based on the second CSI.

51. The network device of claim 50, wherein the target object comprises any one or a combination of:
a first model, wherein the first model is a model corresponding to the second model and used for the terminal device to determine the first CSI;
the second model;
a two-sided model composed of the first model and the second model; or
a method of determining the first CSI based on a codebook.

52. The network device of any one of claims 42-46 and 48, wherein the operations further comprise:
receiving an evaluation result transmitted from the terminal device.

53. An apparatus for performance evaluation, for use in a terminal device, comprising:
a first receiving unit, used for receiving a first reference signal transmitted from a network device, wherein a transmission parameter of the first reference signal is determined by the network device based on channel state information (CSI), and the CSI is determined based on a target object and/or the CSI is transmitted based on a target object; and
a first evaluating unit, used for evaluating performance of the target object based on the received first reference signal.

54. The apparatus of claim 53, wherein the transmission parameter comprises at least one of:
a transmission position;
a beamforming parameter; or
resource configuration.

55. The apparatus of claim 53, wherein the target object comprises any one or a combination of:
a method for determining CSI;
a method for transmitting CSI; or
a model for determining CSI.

56. The apparatus of claim 53, wherein there is a correspondence between the first reference signal and the target object.

57. The apparatus of claim 56, wherein the first evaluating unit is further used for:
evaluating the performance of the target object based on the received first reference signal and the correspondence.

58. The apparatus of claim 56, wherein
the first receiving unit is used for receiving first indication information transmitted from the network device to indicate the correspondence; and
the apparatus further comprises a first transmitting unit, used for transmitting second indication information to the network device to indicate the correspondence; or
the apparatus further comprises a first determining unit, used for determining the correspondence based on a pre-agreement with the network device.

59. The apparatus of any one of claims 56 to 58, wherein the correspondence comprises one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information;
or
a correspondence between the target object and timing offset information between a transmission occasion of the first reference signal and a transmission occasion of CSI.

60. The apparatus of claim 58, wherein the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

61. The apparatus of any one of claims 53-58 and 60, wherein the first evaluating unit is further used for:
determining a first performance metric corresponding to the first reference signal based on the first reference signal; and
evaluating the performance of the target object based on the first performance metric.

62. The apparatus of claim 61, wherein the first performance metric comprises at least one of:
reference signal received power (RSRP);
reference signal received quality (RSRQ);
a signal-to-interference-plus-noise ratio (SINR);
a system performance metric;
a precision metric; or
a distribution metric.

63. The apparatus of claim 61, wherein the first evaluating unit is further used for at least one of:
evaluating the performance of the target object based on the first performance metric and a first value range;
evaluating the performance of the target object based on the first performance metric and a performance metric corresponding to a reference object; or
evaluating the performance of the target object based on the first performance metric and one or more performance metrics corresponding to a reference signal, wherein a number of the reference signal is one or more.

64. The apparatus of any one of claims 53-58 and 60, wherein the first receiving unit is further used for:
receiving a second reference signal transmitted from the network device; and
the apparatus further comprises a first CSI determining unit, used for determining first CSI based on the second reference signal; and
the first transmitting unit is further used for transmitting the first CSI to the network device, wherein the first CSI is used for determining, by the network device, the transmission parameter of the first reference signal.

65. The apparatus of claim 64, wherein the first CSI determining unit is further used for:
determining the first CSI based on a codebook and the second reference signal; or
determining the first CSI based on a first model and the second reference signal;
wherein, in case of determining the first CSI based on the first model and the second reference signal, the first CSI is used for determining, by the network device, second CSI based on a second model corresponding to the first model, and the second CSI is used for determining, by the network device, the transmission parameter of the first reference signal.

66. The apparatus of claim 65, wherein the target object comprises any one or a combination of:
the first model;
the second model;
a two-sided model composed of the first model and the second model; or
a method of determining the first CSI based on a codebook.

67. The apparatus of any one of claims 53-58 and 60, wherein the first transmitting unit is further used for:
transmitting an evaluation result to the network device.

68. An apparatus for performance evaluation, for use in a network device, comprising:
a second transmitting unit, used for transmitting a first reference signal to a terminal device, wherein a transmission parameter of the first reference signal is determined by the network device based on channel state information (CSI), the CSI is determined based on a target object and/or the CSI is transmitted based on a target object, and the first reference signal is used for the terminal device to evaluate performance of the target object.

69. The apparatus of claim 68, wherein the transmission parameter comprises at least one of:
a transmission position;
a beamforming parameter; or
resource configuration.

70. The apparatus of claim 68, wherein the target object comprises any one or a combination of:
a method for determining CSI;
a method for transmitting CSI; or
a model for determining CSI.

71. The apparatus of claim 68, wherein there is a correspondence between the first reference signal and the target object.

72. The apparatus of claim 71, wherein the second transmitting unit is further used for at least one of:
transmitting first indication information to the terminal device to indicate the correspondence;
the apparatus further comprises a second receiving unit, used for receiving second indication information transmitted from the terminal device to indicate the correspondence; or
the apparatus further comprises a second determining unit, used for determining the correspondence based on a pre-agreement with the terminal device.

73. The apparatus of claim 71 or 72, wherein the correspondence comprises one or more of:
a correspondence between the target object and a resource set corresponding to the first reference signal;
a correspondence between the target object and identification information of a resource set corresponding to the first reference signal;
a correspondence between the target object and a transmission occasion corresponding to a resource set corresponding to the first reference signal;
a correspondence between the target object and identification information corresponding to the first reference signal;
a correspondence between the target object and a transmission occasion corresponding to the first reference signal;
a correspondence between the target object and resource configuration information corresponding to the first reference signal;
a correspondence between the target object and a transmission occasion corresponding to resource configuration information corresponding to the first reference signal;
a correspondence between the first reference signal and identification information corresponding to the target object;
a correspondence among the first reference signal, the target object, and identification information corresponding to CSI;
a correspondence among the first reference signal, the target object, and CSI report configuration information;
a correspondence among the first reference signal, the target object, and CSI report resource information; or
a correspondence between the target object and timing offset information between a transmission occasion of the first reference signal and a transmission occasion of CSI.

74. The apparatus of claim 72, wherein the first indication information or the second indication information is used to indicate one or more of:
a resource set corresponding to the first reference signal;
identification information of a resource set corresponding to the first reference signal;
a transmission occasion corresponding to a resource set corresponding to the first reference signal;
identification information corresponding to the first reference signal;
a transmission occasion corresponding to the first reference signal;
resource configuration information corresponding to the first reference signal;
a transmission occasion corresponding to resource configuration information corresponding to the first reference signal;
CSI report configuration information corresponding to the first reference signal;
CSI report resource information corresponding to the first reference signal;
timing offset information between a transmission of CSI corresponding to the first reference signal and a transmission of the first reference signal;
identification information corresponding to the target object;
a resource set corresponding to the target object;
identification information of a resource set corresponding to the target object;
a transmission occasion corresponding to a resource set corresponding to the target object;
resource configuration information corresponding to the target object;
a transmission occasion corresponding to resource configuration information corresponding to the target object;
CSI information corresponding to the target object; or
timing offset information between a transmission of CSI corresponding to the target object and a transmission of the first reference signal.

75. The apparatus of any one of claims 68-72 and 74, wherein the second transmitting unit is further used for:
transmitting a second reference signal to the terminal device;
the second receiving unit is further used for receiving first CSI determined based on the second reference signal transmitted from the terminal device; and
the apparatus further comprises a parameter determining used for determining the transmission parameter of the first reference signal based on the first CSI.

76. The apparatus of claim 75, wherein the parameter determining unit is further used for:
determining the transmission parameter of the first reference signal based on a codebook and the first CSI; or
determining second CSI based on a second model and the first CSI, and determining the transmission parameter of the first reference signal based on the second CSI.

77. The apparatus of claim 76, wherein the target object comprises any one or a combination of:
a first model, wherein the first model is a model corresponding to the second model and used for the terminal device to determine the first CSI;
the second model;
a two-sided model composed of the first model and the second model; or
a method of determining the first CSI based on a codebook.

78. The apparatus of any one of claims 68-72 and 74, wherein the second receiving unit is further used for:
receiving an evaluation result transmitted from the terminal device.

79. A processor-readable storage medium, wherein the computer-readable storage medium stores a computer program, and the computer program is used to cause a processor to perform the method of any one of claims 1 to 15.

80. A processor-readable storage medium, wherein the computer-readable storage medium stores a computer program, and the computer program is used to cause a processor to perform the method of any one of claims 16 to 26.
